(19) **Europäisches Patentamt**
**European Patent Office**
**Office européen des brevets**

(11) **EP 4 462 839 A1**

(12) **EUROPEAN PATENT APPLICATION**

(43) Date of publication:
**13.11.2024 Bulletin 2024/46**

(21) Application number: **24173048.0**

(22) Date of filing: **29.04.2024**

(51) International Patent Classification (IPC):
**H04W 12/084** (2021.01)

(52) Cooperative Patent Classification (CPC):
**H04W 12/084**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.05.2023 IN 202341033370**

(71) Applicant: **Nokia Technologies Oy
02610 Espoo (FI)**

(72) Inventors:
- **LANDAIS, Bruno**
  **Pleumeur-Bodou (FR)**
- **KHARE, Saurabh**
  **Bangalore, Karnataka (IN)**
- **JERICHOW, Anja**
  **Grafing bei München (DE)**

(74) Representative: **Nokia EPO representatives
Nokia Technologies Oy
Karakaari 7
02610 Espoo (FI)**

(54) **APPARATUS, METHOD, AND COMPUTER PROGRAM**

(57) There is provided a method, apparatus, and computer program for causing a first network apparatus to perform: signalling, to a second network apparatus, a request for an access token for a network function consumer for authorizing the network function service consumer to access a first service from a network function service producer; receiving an access token from the second network apparatus, wherein the received access token comprises an indication of at least one second access right unassociated with accessing the first service; and causing the received access token to be provided to the network function service producer when the network function service producer is signalled a request to provide a service to the network function service consumer.

**Fig.10**

**Description**

*Field of the disclosure*

The examples described herein generally relate to apparatus, methods, and computer programs, and more particularly (but not exclusively) to apparatus, methods and computer programs for apparatuses.

*Background*

A communication system can be seen as a facility that enables communication sessions between two or more entities such as communication devices, base stations and/or other nodes by providing carriers between the various entities involved in the communications path.

The communication system may be a wireless communication system. Examples of wireless systems comprise public land mobile networks (PLMN) operating based on radio standards such as those provided by 3GPP, satellite based communication systems and different wireless local networks, for example wireless local area networks (WLAN). The wireless systems can typically be divided into cells, and are therefore often referred to as cellular systems.

The communication system and associated devices operate in accordance with a given set of standards or specifications that set out what the various entities associated with the system are permitted to do and how that is to be achieved. Communication protocols and/or parameters that are to be used for the connection are also typically defined. Examples of standards are the so-called 5G standards.

*Summary*

According to a first aspect, there is provided a first network apparatus, the first network apparatus comprising: means for signalling, to a second network apparatus, a request for an access token for a network function consumer for authorizing the network function service consumer to access a first service from a network function service producer; means for receiving an access token from the second network apparatus, wherein the received access token comprises an indication of at least one second access right unassociated with accessing the first service; and means for causing the received access token to be provided to the network function service producer when the network function service producer is signalled a request to provide a service to the network function service consumer.

The first network apparatus may further comprise means for receiving, from the network function service consumer, a service request for the first service prior to said signalling the request for an access token.

The service request may comprise at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further comprise: means for signalling, to the second network apparatus, a discovery request for discovering the network function service producer; and means for receiving an indication of the network function service producer prior to said signalling the request for an access token.

Said means for signalling the request for an access token may comprise: means for signalling a request comprising at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further comprise means for providing the network function service consumer with the received access token that comprises the indication of at least one second access right unassociated with accessing the first service.

The first network apparatus may further comprise means for causing the received access token to be provided to the network function service producer when the network function service producer is signalled a request to provide a second service to the network function service consumer, wherein the second service is associated with at least one of the at least one second access right.

The means for causing the received access token to be provided to the network function service producer when the network function service producer is signalled the request to provide the second service to the network function service consumer may comprise means for signalling the received access token to the network function service producer with a request to provide the network function service consumer with the second service.

The first network apparatus may further comprise means for receiving, from the network function service consumer, a request for the second service that comprises the received access token.

The first network apparatus may further comprise means for determining not to request a new access token in dependence on determining that the received access token authorizes access to the at least one second access right.

The first network apparatus may further comprise: means for determining that the first service is associated with a predetermined set of access rights; means for determining that the received access token granted by the second network apparatus omits at least one access right of the predetermined set of access rights; and means for retaining the received access token and/or providing the received access token to the network function service consumer without requesting the network function service producer to provide the network function service consumer with the first service.

The means for causing the received access token to be provided to the network function service producer when the network function service producer is signalled a request to provide the service to the network function service consumer may comprise means for signalling the received access token to the network function service producer with a request to provide the network function service consumer with the first service.

Said means for causing the received access token to be provided to the network function service producer may comprise: means for determining, that the first service is associated with a predetermined set of access rights; means for determining that the received access token comprises all access rights of the predetermined set of access rights; and means for providing the received access token to the network function service producer to request the first service.

The access right to access a service may correspond to a scope of an authorization access token.

According to a second aspect, there is provided a second network apparatus, the second network apparatus comprising: means for receiving, from a first network apparatus, a request for an access token for a network function consumer for authorizing the network function service consumer to access a first service from a network function service producer; means for generating an access token, wherein the access token comprises an indication of at least one second access right unassociated with accessing the first service; and means for signalling, to the first network apparatus, the generated access token.

The second network apparatus may further comprise: means for receiving, from the network function service producer, an indication of at least one of: at least one first access right associated with accessing the first service, or the at least one second access right; and means for storing the at least one first access right and/or the at least one second access right in a network profile for the network function service producer.

Said means for generating may comprise means for retrieving the indication of the at least one first access right and/or the at least one second access right from the network profile for the network function service producer.

The request may comprise at least one of: an indication that at least one first access right associated with accessing the first service is being requested, an indication that the at least one second access right unassociated with accessing the first service is being requested, or an indication that all access rights provided by the network function service producer are being requested.

The means for generating the access token may comprise: means for determining, that the first service is associated with a predetermined set of access rights; means for determining that the access token being generated is to omit at least one access right of the predetermined set of access rights; and means for generating the generated access token to omit at the least one access right of the predetermined set of access rights.

The means for generating the access token may comprise: means for determining, that the first service is associated with a predetermined set of access rights; means for determining that the access token being generated is to comprise all access right of the predetermined set of access rights; and means for generating the generated access token to comprise all access rights of the predetermined set of access rights.

The access right to access a service may correspond to a scope of an authorization access token.

According to a third aspect, there is provided an apparatus for a network function service consumer, the apparatus comprising: means for signalling, to a first network apparatus, a service request for accessing a first service from a network function service producer; means for receiving an access token from the first network apparatus, wherein the access token comprises an indication of at least one second access right unassociated with accessing the first service; and means for causing the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The apparatus may further comprise means for causing the access token to be provided to the network function service producer when the network function service producer is signalled a request to provide a second service to the network function service consumer, wherein the second service is associated with at least one of the at least one second access right.

The means for causing the access token to be provided to the network function service producer when the network function service producer is signalled a request to provide the second service to the network function service consumer may comprise means for signalling the access token to the network function service producer with a request to provide the network function service consumer with the second service.

The apparatus may further comprise means for signalling, to the first network apparatus, a request for the second service that comprises the access token.

The means for causing the access token to be provided to the network function service producer may comprise: means for determining that the second service is associated with a second predetermined set of access rights; means for determining that the access token comprises all of the access rights of the predetermined set of access rights; and means for providing the access token to the first network apparatus when signalling a request to access the second service.

The apparatus may further comprise: means for determining, that the first service is associated with a first predetermined set of access rights; means for determining that the access token omits at least one access right of the first predetermined set of access rights; and means for retaining the access token.

**The** access right to access a service may correspond to a scope of an authorization access token.

According to a fourth aspect, there is provided a first network apparatus, the first network apparatus comprising: at least one processor; and at least one memory comprising code that, when executed by the at least one processor, causes the first network apparatus to perform: signalling, to a second network apparatus, a request for an access token for a network function consumer for authorizing the network function service consumer to access a first service from a network function service producer; receiving an access token from the second network apparatus, wherein the received access token comprises an indication of at least one second access right unassociated with accessing the first service; and causing the received access token to be provided to the network function service producer when the network function service producer is signalled a request to provide a service to the network function service consumer.

The first network apparatus may further be caused to perform receiving, from the network function service consumer, a service request for the first service prior to said signalling the request for an access token.

The service request may comprise at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further be caused to perform: signalling, to the second network apparatus, a discovery request for discovering the network function service producer; and receiving an indication of the network function service producer prior to said signalling the request for an access token.

Said signalling the request for an access token may comprise: signalling a request comprising at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further be caused to perform providing the network function service consumer with the received access token that comprises the indication of at least one second access right unassociated with accessing the first service.

The first network apparatus may further be caused to perform causing the received access token to be provided to the network function service producer when the network function service producer is signalled a request to provide a second service to the network function service consumer, wherein the second service is associated with at least one of the at least one second access right.

The causing the received access token to be provided to the network function service producer when the network function service producer is signalled the request to provide the second service to the network function service consumer may comprise signalling the received access token to the network function service producer with a request to provide the network function service consumer with the second service.

The first network apparatus may further be caused to perform receiving, from the network function service consumer, a request for the second service that comprises the received access token.

The first network apparatus may further be caused to perform determining not to request a new access token in dependence on determining that the received access token authorizes access to the at least one second access right.

The first network apparatus may further be caused to perform: determining that the first service is associated with a predetermined set of access rights; determining that the received access token granted by the second network apparatus omits at least one access right of the predetermined set of access rights; and retaining the received access token and/or providing the received access token to the network function service consumer without requesting the network function service producer to provide the network function service consumer with the first service.

The causing the received access token to be provided to the network function service producer when the network function service producer is signalled a request to provide the service to the network function service consumer may comprise signalling the received access token to the network function service producer with a request to provide the network function service consumer with the first service.

Said causing the received access token to be provided to the network function service producer may comprise: determining, that the first service is associated with a predetermined set of access rights; determining that the received access token comprises all access rights of the predetermined set of access rights; and providing the received access token to the network function service producer to request the first service.

The access right to access a service may correspond to a scope of an authorization access token.

According to a fifth aspect, there is provided a second network apparatus, the second network apparatus comprising: at least one processor; and at least one memory comprising code that, when executed by the at least one processor, causes the second network apparatus to perform: receiving, from a first network apparatus, a request for an access token for a network function consumer for authorizing the network function service consumer to access a first service from a network function service producer; generating an access token, wherein the access token comprises an indication of at least one second access right unassociated with accessing the first service; and signalling, to the first network apparatus, the generated access token.

The second network apparatus may further be caused to perform: receiving, from the network function service producer, an indication of at least one of: at least one first access right associated with accessing the first service, or the at least one second access right; and storing the at least one first access right and/or the at least one second access right in a network profile for the network function service producer.

Said generating may comprise retrieving the indication of the at least one first access right and/or the at least one second access right from the network profile for the network function service producer.

The request may comprise at least one of: an indication that at least one first access right associated with accessing the first service is being requested, an indication that the at least one second access right unassociated with accessing the first service is being requested, or an indication that all access rights provided by the network function service producer are being requested.

The generating the access token may comprise: determining, that the first service is associated with a predetermined set of access rights; determining that the access token being generated is to omit at least one access right of the predetermined set of access rights; and generating the generated access token to omit at the least one access right of the predetermined set of access rights.

The generating the access token may comprise: determining, that the first service is associated with a predetermined set of access rights; determining that the access token being generated is to comprise all access right of the predetermined set of access rights; and generating the generated access token to comprise all access rights of the predetermined set of access rights.

The access right to access a service may correspond to a scope of an authorization access token.

According to a sixth aspect, there is provided an apparatus for a network function service consumer, the apparatus comprising: at least one processor; and at least one memory comprising code that, when executed by the at least one processor, causes the apparatus to perform: signalling, to a first network apparatus, a service request for accessing a first service from a network function service producer; receiving an access token from the first network apparatus, wherein the access token comprises an indication of at least one second access right unassociated with accessing the first service; and causing the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The apparatus may further be caused to perform causing the access token to be provided to the network function service producer when the network function service producer is signalled a request to provide a second service to the network function service consumer, wherein the second service is associated with at least one of the at least one second access right.

The causing the access token to be provided to the network function service producer when the network function service producer is signalled a request to provide the second service to the network function service consumer may comprise signalling the access token to the network function service producer with a request to provide the network function service consumer with the second service.

The apparatus may further be caused to perform signalling, to the first network apparatus, a request for the second service that comprises the access token.

The causing the access token to be provided to the network function service producer may comprise: determining that the second service is associated with a second predetermined set of access rights; determining that the access token comprises all of the access rights of the predetermined set of access rights; and providing the access token to the first network apparatus when signalling a request to access the second service.

The apparatus may further be caused to perform: determining, that the first service is associated with a first predetermined set of access rights; determining that the access token omits at least one access right of the first predetermined set of access rights; and retaining the access token.

The access right to access a service may correspond to a scope of an authorization access token.

According to a seventh aspect, there is provided a method for first network apparatus, the method comprising: signalling, to a second network apparatus, a request for an access token for a network function consumer for authorizing the network function service consumer to access a first service from a network function service producer; receiving an access token from the second network apparatus, wherein the received access token comprises an indication of at least one second access right unassociated with accessing the first service; and causing the received access token to be provided to the network function service producer when the network function service producer is signalled a request to provide a service to the network function service consumer.

The method may further comprise receiving, from the network function service consumer, a service request for the first service prior to said signalling the request for an access token.

The service request may comprise at least one of the following: an indication that at least one first access right associated with accessing the first service is being requested, an indication that the at least one second access right unassociated with accessing the first service is being requested, or an indication that all access rights provided by the network function service producer are being requested.

The method may further comprise: signalling, to the second network apparatus, a discovery request for discovering the network function service producer; and receiving an indication of the network function service producer prior to said signalling the request for an access token.

Said signalling the request for an access token may comprise: signalling a request comprising at least one of the following: an indication that at least one first access right associated with accessing the first service is being requested, an indication that the at least one second access right unassociated with accessing the first service is being requested, or an indication that all access rights provided by the network function service producer are being requested.

The method may further comprise providing the network function service consumer with the received access token that comprises the indication of at least one second access right unassociated with accessing the first service.

The method may further comprise causing the received access token to be provided to the network function service producer when the network function service producer is signalled a request to provide a second service to the network function service consumer, wherein the second service is associated with at least one of the at least one second access right.

The causing the received access token to be provided to the network function service producer when the network function service producer is signalled the request to provide the second service to the network function service consumer may comprise signalling the received access token to the network function service producer with a request to provide the network function service consumer with the second service.

The method may further comprise receiving, from the network function service consumer, a request for the second service that comprises the received access token.

The method may further comprise determining not to request a new access token in dependence on determining that the received access token authorizes access to the at least one second access right.

The method may further comprise: determining that the first service is associated with a predetermined set of access rights; determining that the received access token granted by the second network apparatus omits at least one access right of the predetermined set of access rights; and retaining the received access token and/or providing the received access token to the network function service consumer without requesting the network function service producer to provide the network function service consumer with the first service.

The causing the received access token to be provided to the network function service producer when the network function service producer is signalled a request to provide the service to the network function service consumer may comprise signalling the received access token to the network function service producer with a request to provide the network function service consumer with the first service.

Said causing the received access token to be provided to the network function service producer may comprise: determining, that the first service is associated with a predetermined set of access rights; determining that the received access token comprises all access rights of the predetermined set of access rights; and providing the received access token to the network function service producer to request the first service.

The access right to access a service may correspond to a scope of an authorization access token.

According to an eighth aspect, there is provided a method for a second network apparatus, the method comprising: receiving, from a first network apparatus, a request for an access token for a network function consumer for authorizing the network function service consumer to access a first service from a network function service producer; generating an access token, wherein the access token comprises an indication of at least one second access right unassociated with accessing the first service; and signalling, to the first network apparatus, the generated access token.

The method may further comprise: receiving, from the network function service producer, an indication of at least one of: at least one first access right associated with accessing the first service, or the at least one second access right; and storing the at least one first access right and/or the at least one second access right in a network profile for the network function service producer.

Said generating may comprise retrieving the indication of the at least one first access right and/or the at least one second access right from the network profile for the network function service producer.

The request may comprise at least one of: an indication that at least one first access right associated with accessing the first service is being requested, an indication that the at least one second access right unassociated with accessing the first service is being requested, or an indication that all access rights provided by the network function service producer are being requested.

The generating the access token may comprise: determining, that the first service is associated with a predetermined set of access rights; determining that the access token being generated is to omit at least one access right of the predetermined set of access rights; and generating the generated access token to omit at the least one access right of the predetermined set of access rights.

**The** generating the access token may comprise: determining, that the first service is associated with a predetermined set of access rights; determining that the access token being generated is to comprise all access right of the predetermined set of access rights; and generating the generated access token to comprise all access rights of the predetermined set of access rights.

The access right to access a service may correspond to a scope of an authorization access token.

According to a ninth aspect, there is provided a method for an apparatus for a network function service consumer, the method comprising: signalling, to a first network apparatus, a service request for accessing a first service from a network function service producer; receiving an access token from the first network apparatus, wherein the access token comprises an indication of at least one second access right unassociated with accessing the first service; and causing the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The method may further comprise causing the access token to be provided to the network function service producer when the network function service producer is signalled a request to provide a second service to the network function service consumer, wherein the second service is associated with at least one of the at least one second access right.

The causing the access token to be provided to the network function service producer when the network function service producer is signalled a request to provide the second service to the network function service consumer may comprise signalling the access token to the network function service producer with a request to provide the network function service consumer with the second service.

The method may further comprise signalling, to the first network apparatus, a request for the second service that comprises the access token.

The causing the access token to be provided to the network function service producer may comprise: determining that the second service is associated with a second predetermined set of access rights; determining that the access token comprises all of the access rights of the predetermined set of access rights; and providing the access token to the first network apparatus when signalling a request to access the second service.

The method may further comprise: determining, that the first service is associated with a first predetermined set of access rights; determining that the access token omits at least one access right of the first predetermined set of access rights; and retaining the access token.

The access right to access a service may correspond to a scope of an authorization access token.

According to a tenth aspect, there is provided a first network apparatus, the first network apparatus comprising: signalling circuitry for signalling, to a second network apparatus, a request for an access token for a network function consumer for authorizing the network function service consumer to access a first service from a network function service producer; receiving circuitry for receiving an access token from the second network apparatus, wherein the received access token comprises an indication of at least one second access right unassociated with accessing the first service; and causing circuitry for causing the received access token to be provided to the network function service producer when the network function service producer is signalled a request to provide a service to the network function service consumer.

The first network apparatus may further comprise receiving circuitry for receiving, from the network function service consumer, a service request for the first service prior to said signalling the request for an access token.

The service request may comprise at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further comprise: signalling circuitry for signalling, to the second network apparatus, a discovery request for discovering the network function service producer; and receiving circuitry for receiving an indication of the network function service producer prior to said signalling the request for an access token.

Said signalling circuitry for signalling the request for an access token may comprise: signalling circuitry for signalling a request comprising at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further comprise providing circuitry for providing the network function service consumer with the received access token that comprises the indication of at least one second access right unassociated with accessing the first service.

The first network apparatus may further comprise causing circuitry for causing the received access token to be provided to the network function service producer when the network function service producer is signalled a request to provide a second service to the network function service consumer, wherein the second service is associated with at least one of the at least one second access right.

The causing circuitry for causing the received access token to be provided to the network function service producer when the network function service producer is signalled the request to provide the second service to the network function service consumer may comprise signalling circuitry for signalling the received access token to the network function service producer with a request to provide the network function service consumer with the second service.

The first network apparatus may further comprise receiving circuitry for receiving, from the network function service consumer, a request for the second service that comprises the received access token.

The first network apparatus may further comprise determining circuitry for determining not to request a new access token in dependence on determining that the received access token authorizes access to the at least one second access right.

The first network apparatus may further comprise: determining circuitry for determining that the first service is associated with a predetermined set of access rights; determining circuitry for determining that the received access token granted by the second network apparatus omits at least one access right of the predetermined set of access rights; and retaining circuitry for retaining the received access token and/or providing the received access token to the network function service consumer without requesting the network function service producer to provide the network function service consumer with the first service.

The causing circuitry for causing the received access token to be provided to the network function service producer when the network function service producer is signalled a request to provide the service to the network function service consumer may comprise signalling circuitry for signalling the received access token to the network function service producer with a request to provide the network function service consumer with the first service.

Said causing circuitry for causing the received access token to be provided to the network function service producer may comprise: determining circuitry for determining, that the first service is associated with a predetermined set of access rights; determining circuitry for determining that the received access token comprises all access rights of the predetermined set of access rights; and providing circuitry for providing the received access token to the network function service producer to request the first service.

The access right to access a service may correspond to a scope of an authorization access token.

According to an eleventh aspect, there is provided a second network apparatus, the second network apparatus comprising: receiving circuitry for receiving, from a first network apparatus, a request for an access token for a network function consumer for authorizing the network function service consumer to access a first service from a network function service producer; generating circuitry for generating an access token, wherein the access token comprises an indication of at least one second access right unassociated with accessing the first service; and signalling circuitry for signalling, to the first network apparatus, the generated access token.

The second network apparatus may further comprise: receiving circuitry for receiving, from the network function service producer, an indication of at least one of: at least one first access right associated with accessing the first service, or the at least one second access right; and storing circuitry for storing the at least one first access right and/or the at least one second access right in a network profile for the network function service producer.

Said generating circuitry for generating may comprise retrieving circuitry for retrieving the indication of the at least one first access right and/or the at least one second access right from the network profile for the network function service producer.

The request may comprise at least one of: an indication that at least one first access right associated with accessing the first service is being requested, an indication that the at least one second access right unassociated with accessing the first service is being requested, or an indication that all access rights provided by the network function service producer are being requested.

The generating circuitry for generating the access token may comprise: determining circuitry for determining, that the first service is associated with a predetermined set of access rights; determining circuitry for determining that the access token being generated is to omit at least one access right of the predetermined set of access rights; and

8

generating circuitry for generating the generated access token to omit at the least one access right of the predetermined set of access rights.

The generating circuitry for generating the access token may comprise: determining circuitry for determining, that the first service is associated with a predetermined set of access rights; determining circuitry for determining that the access token being generated is to comprise all access right of the predetermined set of access rights; and generating circuitry for generating the generated access token to comprise all access rights of the predetermined set of access rights.

The access right to access a service may correspond to a scope of an authorization access token.

According to a twelfth aspect, there is provided an apparatus for a network function service consumer, the apparatus comprising: signalling circuitry for signalling, to a first network apparatus, a service request for accessing a first service from a network function service producer; receiving circuitry for receiving an access token from the first network apparatus, wherein the access token comprises an indication of at least one second access right unassociated with accessing the first service; and causing circuitry for causing the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The apparatus may further comprise causing circuitry for causing the access token to be provided to the network function service producer when the network function service producer is signalled a request to provide a second service to the network function service consumer, wherein the second service is associated with at least one of the at least one second access right.

The causing circuitry for causing the access token to be provided to the network function service producer when the network function service producer is signalled a request to provide the second service to the network function service consumer may comprise signalling circuitry for signalling the access token to the network function service producer with a request to provide the network function service consumer with the second service.

The apparatus may further comprise signalling circuitry for signalling, to the first network apparatus, a request for the second service that comprises the access token.

The causing circuitry for causing the access token to be provided to the network function service producer may comprise: determining circuitry for determining that the second service is associated with a second predetermined set of access rights; determining circuitry for determining that the access token comprises all of the access rights of the predetermined set of access rights; and providing circuitry for providing the access token to the first network apparatus when signalling a request to access the second service.

The apparatus may further comprise: determining circuitry for determining, that the first service is associated with a first predetermined set of access rights; determining circuitry for determining that the access token omits at least one access right of the first predetermined set of access rights; and retaining circuitry for retaining the access token.

The access right to access a service may correspond to a scope of an authorization access token.

According to a thirteenth aspect, there is provided non-transitory computer readable medium comprising program instructions for causing a first network apparatus to perform: signalling, to a second network apparatus, a request for an access token for a network function consumer for authorizing the network function service consumer to access a first service from a network function service producer; receiving an access token from the second network apparatus, wherein the received access token comprises an indication of at least one second access right unassociated with accessing the first service; and causing the received access token to be provided to the network function service producer when the network function service producer is signalled a request to provide a service to the network function service consumer.

The first network apparatus may further be caused to perform receiving, from the network function service consumer, a service request for the first service prior to said signalling the request for an access token.

The service request may comprise at least one of the following: an indication that at least one first access right associated with accessing the first service is beingrequested, an indication that the at least one second access right unassociated with accessing the first service is being requested, or an indication that all access rights provided by the network function service producer are being requested.

The first network apparatus may further be caused to perform: signalling, to the second network apparatus, a discovery request for discovering the network function service producer; and receiving an indication of the network function service producer prior to said signalling the request for an access token.

Said signalling the request for an access token may comprise: signalling a request comprising at least one of the following: an indication that at least one first access right associated with accessing the first service is being requested, an indication that the at least one second access right unassociated with accessing the first service is being requested, or an indication that all access rights provided by the network function service producer are being requested.

The first network apparatus may further be caused to perform providing the network function service consumer with the received access token that comprises the indication of at least one second access right unassociated with accessing the first service.

The first network apparatus may further be caused to perform causing the received access token to be provided to the network function service producer when the network function service producer is signalled a request to provide a second service to the network function service consumer, wherein the second service is associated with at least one of the at least one second access right.

The causing the received access token to be provided to the network function service producer when the network function service producer is signalled the request to provide the second service to the network function service consumer may comprise signalling the received access token to the network function service producer with a request to provide the network function service consumer with the second service.

The first network apparatus may further be caused to perform receiving, from the network function service consumer, a request for the second service that comprises the received access token.

The first network apparatus may further be caused to perform determining not to request a new access token in dependence on determining that the received access token authorizes access to the at least one second access right.

The first network apparatus may further be caused to perform: determining that the first service is associated with a predetermined set of access rights; determining that the received access token granted by the second network apparatus omits at least one access right of the predetermined set of access rights; and retaining the received access token and/or providing the received access token to the network function service consumer without requesting the network function service producer to provide the network function service consumer with the first service.

The causing the received access token to be provided to the network function service producer when the network function service producer is signalled a request to provide the service to the network function service consumer may comprise signalling the received access token to the network function service producer with a request to provide the network function service consumer with the first service.

Said causing the received access token to be provided to the network function service producer may comprise: determining, that the first service is associated with a predetermined set of access rights; determining that the received access token comprises all access rights of the predetermined set of access rights; and providing the received access token to the network function service producer to request the first service.

The access right to access a service may correspond to a scope of an authorization access token.

According to a fourteenth aspect, there is provided non-transitory computer readable medium comprising program instructions for causing a second network apparatus to perform: receiving, from a first network apparatus, a request for an access token for a network function consumer for authorizing the network function service consumer to access a first service from a network function service producer; generating an access token, wherein the access token comprises an indication of at least one second access right unassociated with accessing the first service; and signalling, to the first network apparatus, the generated access token.

The second network apparatus may further be caused to perform: receiving, from the network function service producer, an indication of at least one of: at least one first access right associated with accessing the first service, or the at least one second access right; and storing the at least one first access right and/or the at least one second access right in a network profile for the network function service producer.

Said generating may comprise retrieving the indication of the at least one first access right and/or the at least one second access right from the network profile for the network function service producer.

The request may comprise at least one of: an indication that at least one first access right associated with accessing the first service is being requested, an indication that the at least one second access right unassociated with accessing the first service is being requested, or an indication that all access rights provided by the network function service producer are being requested.

The generating the access token may comprise: determining, that the first service is associated with a predetermined set of access rights; determining that the access token being generated is to omit at least one access right of the predetermined set of access rights; and generating the generated access token to omit at the least one access right of the predetermined set of access rights.

The generating the access token may comprise: determining, that the first service is associated with a predetermined set of access rights; determining that the access token being generated is to comprise all access right of the predetermined set of access rights; and generating the generated access token to comprise all access rights of the predetermined set of access rights.

The access right to access a service may correspond to a scope of an authorization access token.

According to a fifteenth aspect, there is provided non-transitory computer readable medium comprising program instructions for causing an apparatus for a network function service consumer to perform: signalling, to a first network apparatus, a service request for accessing a first service from a network function service producer; receiving an access token from the first network apparatus, wherein the access token comprises an indication of at least one second access right unassociated with accessing the first service; and causing the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The apparatus may further be caused to perform causing the access token to be provided to the network function service producer when the network function service producer is signalled a request to provide a second service to the network function service consumer, wherein the second service is associated with at least one of the at least one second access right.

The causing the access token to be provided to the network function service producer when the network function service producer is signalled a request to provide the second service to the network function service consumer may comprise signalling the access token to the network function service producer with a request to provide the network function service consumer with the second service.

The apparatus may further be caused to perform signalling, to the first network apparatus, a request for the second service that comprises the access token.

The causing the access token to be provided to the network function service producer may comprise: determining that the second service is associated with a second predetermined set of access rights; determining that the access token comprises all of the access rights of the predetermined set of access rights; and providing the access token to the first network apparatus when signalling a request to access the second service.

The apparatus may further be caused to perform: determining, that the first service is associated with a first predetermined set of access rights; determining that the access token omits at least one access right of the first predetermined set of access rights; and retaining the access token.

The access right to access a service may correspond to a scope of an authorization access token.

According to a sixteenth aspect, there is provided a computer program product stored on a medium that may cause an apparatus to perform any method as described herein.

According to a seventeenth aspect, there is provided an electronic device that may comprise apparatus as described herein.

According to an eighteenth aspect, there is provided a chipset that may comprise an apparatus as described herein.

*Brief description of Figures*

Some examples, will now be described, merely by way of illustration only, with reference to the accompanying drawings in which:

Figures 1A and 1B show schematic representations of a 5G system;
Figure 2 shows a schematic representation of a network apparatus;
Figure 3 shows a schematic representation of a user equipment;
Figures 4a, 4b and 5 illustrate signalling;
Figures 6 to 9 illustrate example signalling; and
Figures 10 to 12 illustrate example operations that may be performed by apparatus described herein.

*Detailed description*

The following describes operations that may be performed when obtaining an access token that can be used to allow a network function service consumer to receive a service from a network function service producer.

In particular, the following describes a mechanism in which an access token for allowing a network function service consumer to receive such a service is associated with more access rights (also referred to herein as "scopes") than is needed for receiving the service. State differently, where a service is associated with a plurality of scopes that are to be used for providing the service, the network function service consumer is provided with an access token that comprises at least one additional scope that is not comprised in the plurality of scopes.

The access token may subsequently be used for requesting another service for the network function service consumer, where the another service uses the at least one additional scope.

As the access token may be reused for a later service request that is associated with different scopes to the initial service request, the overall system may save signalling and processing resources, as a new access token is neither requested nor obtained.

In the following description of examples, certain aspects are explained with reference to devices that are often capable of communication via a wireless cellular system and mobile communication systems serving such mobile communication devices. For brevity and clarity, the following describes such aspects with reference to a 5G wireless communication system. However, it is understood that such aspects are not limited to 5G wireless communication systems, and may, for example, be applied to other wireless communication systems (for example, current 6G proposals, IEEE 802.11, etc.).

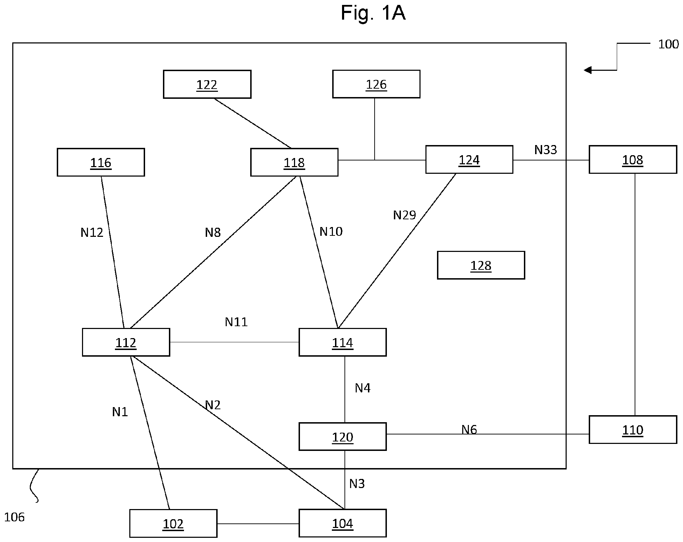

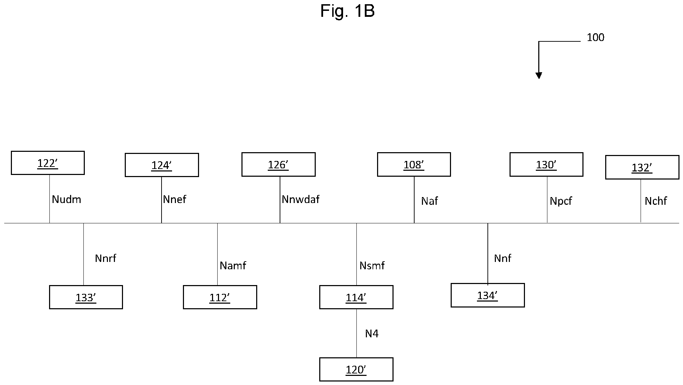

Before describing in detail the examples, certain general principles of a 5G wireless communication system are briefly explained with reference to Figures 1A and 1B.

3GPP standards defined a service-based architecture in 5G, which is expected to be utilized in 6G and beyond.

In a service-based architecture, a modular framework is used in which common applications can be deployed using components from different sources and/or suppliers.

Figure 1A shows a schematic representation of a 5G system (5GS) 100. The 5GS may comprise a user equipment (UE) 102 (which may also be referred to as a communication device or a terminal), a 5G access network (AN) (which may be a 5G Radio Access Network (RAN) or any other type of 5G AN such as a Non-3GPP Interworking Function (N3IWF) /a Trusted Non3GPP Gateway Function (TNGF) for Untrusted / Trusted Non-3GPP access or Wireline Access Gateway Function (W-AGF) for Wireline access) 104, a 5G core (5GC) 106, one or more application functions (AF) 108 and one or more data networks (DN) 110.

The 5G RAN may comprise one or more gNodeB (gNB) distributed unit functions connected to one or more gNodeB (gNB) unit functions. The RAN may comprise one or more access nodes.

The 5GC 106 may comprise one or more Access and Mobility Management Functions (AMF) 112, one or more Session Management Functions (SMF) 114, one or more authentication server functions (AUSF) 116, one or more unified data management (UDM) functions 118, one or more user plane functions (UPF) 120, one or more unified data repository (UDR) functions 122, one or more network repository functions (NRF) 128, and/or one or more network exposure functions (NEF) 124. The role of an NEF is to provide secure exposure of network services (e.g. voice, data connectivity, charging, subscriber data, and so forth) towards a 3rd party. Although NRF 128 is not depicted with its interfaces, it is understood that this is for clarity reasons and that NRF 128 may have a plurality of interfaces with other network functions.

The 5GC 106 also comprises a network data analytics function (NWDAF) 126. The NWDAF is responsible for providing network analytics information upon request from one or more network functions or apparatus within the network. Network functions can also subscribe to the NWDAF 126 to receive information therefrom. Accordingly, the NWDAF 126 is also configured to receive and store network information from one or more network functions or apparatus within the network. The data collection by the NWDAF 126 may be performed based on at least one subscription to the events provided by the at least one network function.

The network may further comprise a management data analytics service (MDAS) producer or MDAS Management Service (MnS) producer. The MDAS MnS producer may provide data analytics in the management plane considering parameters including, for example, load level and/or resource utilization. For example, the MDAS MnS producer for a network function (NF) may collect the NF's load-related performance data, e.g., resource usage status of the NF. The analysis of the collected data may provide forecast of resource usage information in a predefined future time window. This analysis may also recommend appropriate actions e.g., scaling of resources, admission control, load balancing of traffic, and so forth.

An alternate view of the 5GC is represented in Figure 1B. It is understood that this architecture is intended to illustrate potential components that may be comprised in a core network, and the presently described principles are not limited to core networks comprising only the described components.

Figure 1B shows a 5GC 106' comprising a UPF 120' connected to an SMF 114' over an N4 interface. The SMF 114' is connected to each of a UDM 122', an NEF 124', an NWDAF 126', an AF 108', a Policy Control Function (PCF) 130', an AMF 112', and a Charging function 132' over an interconnect medium that also connects these network functions to each other. The 5G core 106' further comprises a network repository function (NRF) 133' and a network function 134' that connect to the interconnect medium.

In the examples of Figures 1A and 1B, control plane functionality and common data repositories of a 5G network are delivered via a set of interconnected network functions that have access to each other's services. For example, a service-based architecture may comprise network functions such as an NEF, an NRF, a UDM, a PCF, and AMF, an SMF, and/or the like. These network functions may provide a service to another entity as an NF "instance".

A network function that is requesting a service from another network function is known as a service consumer (e.g., network function service consumer, NFc), while the another network function is known as a service producer (e.g., network function service producer, NFp).

The NFc and NFp may communicate with each other directly, and/or communicate with each other indirectly via a service communication proxy (SCP). Whether a NF uses direct communication or indirect communication via an SCP is based on a configuration of the NF. Indirect communications can be performed with or without delegated discovery (these are referred to as Model D and Model C respectively), where delegated discovery refers to the use of an SCP for discovering the NFp.

The NRF may maintain a record of available NF instances and their supported services as NF profile(s). For example, at an NFp may register their NF profile in an NRF. An NF profile may comprise NF-level specific information and the list of NF service instances supported by the NFp with their associated attributes.

**An** example of information elements that may be comprised in an NF profile are described below with reference to Table 1. Some of the features of these information elements are described in later parts of this description, including a "scope", which refers to a value that indicates a degree (e.g., a "scope") of access that is associated with a service. A service to be provided may be associated with one or more "scopes" that define a minimum access level needed (e.g., requested) for that service to be provided.

*Table 1 Information elements in an NF profile at an NRF*

| allowedOperationsPerNfType | map (array(string)) | 1..N (1..M) | Map of allowed operations on resources for each type of NF; the key of the map is the NF Type, and the value is an array of scopes.<br><br>The scopes will be any of those defined in the API that defines the current service (identified by the "serviceName" attribute).<br><br>In an NFRegister (or NFUpdate) procedure, this information element may be present when the NF service instance supports and is configured to use resource/operation specific scope(s) for at least one NF type of NF service consumer.<br><br>In an NFStatusNotify procedure, this information element may be present, when it is present in the registered NF service instance and when the map contains a key matching a subscriber's NF type. When present, this information element only comprises the key-value pair of the map matching the subscriber's NF type. |
| --- | --- | --- | --- |
| allowedOperationsPerNfInstance | map (array(string)) | 1..N (1..M) | Map of allowed operations on resources for a given NF Instance; the key of the map may be the NF Instance Id, and the value may be an array of scopes.<br><br>The scopes will be any of those defined in the API that defines the current service (identified by the "serviceName" attribute).<br><br>In an NFRegister (or NFUpdate) procedure, this information element is present when the NF service instance supports and is configured to use resource/operation specific scope(s) for at least one NF instance of NF service consumer.<br><br>In an NFStatusNotify procedure, this information element is present, if it is present in the registered NF service instance and if the map contains a key matching the subscriber's NF Instance identifier. When present, this information element only comprises a key-value pair of the map matching the subscriber's NF Instance ID. |
| allowedOperationsPerNfInstanceOverrides | boolean | 0..1 | This information element, when present and set to true, indicates that the scopes defined in attribute "allowedOperationsPerNfInstance" for a given NF Instance ID take precedence over the scopes defined in attribute "allowedOperationsPerNfType" for the corresponding NF type of the NF Instance associated to such NF Instance ID. |

(continued)

| | | | If this information element is not present, or set to false (default), it indicates that the allowed scopes are any of the scopes present either in "allowedOperationsPerNfType" or in "allowedOperationsPerNfInstance" for the NF Type and NF Instance ID of the NF Service Consumer. |
| --- | --- | --- | --- |

The NRF may provide information from an NF profile to at least one NF instance via a subscription operation and/or via discovery operation.

Under a subscription operation, other NF instances signal a subscription request to the NRF to subscribe to be notified of registrations at the NRF of NF instances of a predetermined type (predetermined according to a type comprised in the subscription request).

Under a discovery operation, the NRF receives Discovery Requests from NF instances that request information of NF instances of a predetermined type (predetermined according to a type comprised in the Discovery Request), and responds to the Discovery Request with details which NF instances support the at least one service specified in the Discovery Request.

An NFc and/or a Service Communication Proxy (SCP) may discover an NFp by performing an NF Discovery procedure towards the NRF with query parameters describing the services or properties of the NFp they wish to discover. The NRF returns NF profiles of candidate NFp matching the query parameters in the response. In Model D, the discovery and selection of the NFp is delegated to the SCP, while in model C, the NFc discovers and selects the NFp.

In networks deploying Oauth2 based service access authorization, an NFc or an SCP may request an OAuth 2.0 authorization server (NRF) an Oauth2 access token granting the NFc the permission to invoke the NFp service and/or specific service operations of the NFp service. The NFc or SCP may then comprise the Oauth2 access token within the service request sent to the NFp. The NFp may provide the request service if the access token grants the required permission to the NFc to access the service.

The above-mentioned attributes of Table 1 may be used in order to determine whether a given resource and/or operation-level scope will be granted to an NF Service Consumer that requested an Oauth2 access token with a specific scope.

For example, when the attribute "allowedOperationsPerNfInstanceOverrides" is absent, or set to false, the NRF only grants such scope in the access token when the scope is present in either "allowedOperationsPerNfType", for the specific NF type of the NF Service Consumer, or in "allowedOperationsPerNfInstance", for the specific NF instance ID of the NF Service Consumer.

When the attribute "allowedOperationsPerNfInstanceOverrides" is present and set to true, the NRF grants such scope in the access token, when the scope is included in the "allowedOperationsPerNfInstance" attribute for the NF Instance ID of the NF Service Consumer. When the attribute "allowedOperationPerNfInstanceOverrides" is present and set to true, but the NF Instance ID of the NF Service Consumer is not included in attribute "allowedOperationPerN-fInstance", the NRF will grant such scope when it is present in the "allowedOperationsPerNfType" for the specific NF type of the NF Service Consumer.

These attributes are not necessarily registered when the NF service instance only supports (or is configured to only use) the service-level scope for all NF service consumers allowed to access the service. When both these attributes are absent, the NRF may grant access tokens for the service-level scope only. When at least one of these information elements is present, these information elements will indicate all the NF types or NF instances allowed to access the NF service instance, with all the corresponding scopes (e.g., the service-level scope and resource/operation specific scopes) allowed for each NF type or NF instance, e.g., any NF type or NF instance not listed in these information elements is disallowed to access the NF service instance.

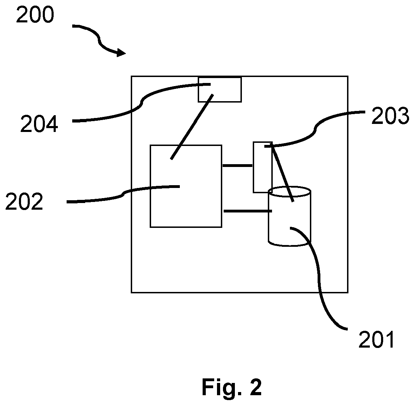

Figure 2 shows an example of a control apparatus for a communication system, for example to be coupled to and/or for controlling a station of an access system, such as a RAN node, e.g. a base station, gNB, a central unit of a cloud architecture or a node of a core network such as an MME or S-GW, a scheduling entity such as a spectrum management entity, or a server or host, for example an apparatus hosting an NRF, NWDAF, AMF, SMF, UDM/UDR, and so forth. The control apparatus may be integrated with or external to a node or module of a core network or RAN. In some examples, base stations comprise a separate control apparatus unit or module. In other examples, the control apparatus can be another network element, such as a radio network controller or a spectrum controller. The control apparatus 200 can be arranged to provide control on communications in the service area of the system. The apparatus 200 comprises at least one memory 201, at least one data processing unit 202, 203 and an input/output interface 204. Via the interface the control apparatus can be coupled to a receiver and a transmitter of the apparatus. The receiver and/or the transmitter may be implemented as a radio front end or a remote radio head. For example, the control apparatus 200 or processor 201 can be configured to execute an appropriate software code to provide the control functions. References to "code" herein are understood to refer to software code, and vice versa.

The station of the access system may be categorised into two different types: distributed units (DUs), and centralised units (CUs).

A DU provides access node support for lower layers of the protocol stack (such as, for example, the radio link control (RLC), medium access control (MAC), and/or physical layer protocol layers). Each DU is able to support one or more cells, while each cell is able to support one or more beams.

A CU can support multiple DUs, and provides access node support for higher layers of the protocol stack within an access node (such as, for example, packet data convergence protocol (PDCP), service data adaptation protocol (SDAP), and/or radio resource control (RRC) protocol layers). The interface between a CU and a DU is labelled as an F1 interface. There is a single CU for each gNB, and CU's belonging to multiple gNB may be implemented using a shared hardware platform.

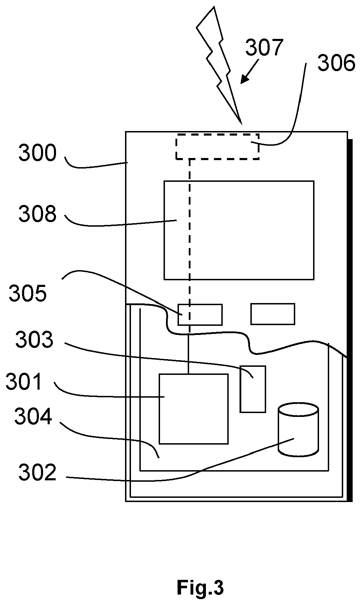

A possible wireless communication device will now be described in more detail with reference to Figure 3 showing a schematic, partially sectioned view of a communication device 300. Such a communication device is often referred to as user equipment (UE) or terminal. An appropriate mobile communication device may be provided by any device capable of sending and receiving radio signals. Non-limiting examples comprise a mobile station (MS) or mobile device such as a mobile phone or what is referred to as a 'smart phone', a computer provided with a wireless interface card or other wireless interface facility (e.g., USB dongle), personal data assistant (PDA) or a tablet provided with wireless communication capabilities, or any combinations of these or the like. A mobile communication device may provide, for example, communication of data for carrying communications such as voice, electronic mail (email), text message, multimedia and so on. Users may thus be offered and provided numerous services via their communication devices. Non-limiting examples of these services comprise two-way or multi-way calls, data communication or multimedia services or simply an access to a data communications network system, such as the Internet. Users may also be provided broadcast or multicast data. Non-limiting examples of the content comprise downloads, television and radio programs, videos, advertisements, various alerts and other information.

A wireless communication device may be for example a mobile device, that is, a device not fixed to a particular location, or it may be a stationary device. The wireless device may need human interaction for communication, or may not need human interaction for communication. As described herein, the terms UE or "user" are used to refer to any type of wireless communication device.

The wireless device 300 may receive signals over an air or radio interface 307 via appropriate apparatus for receiving and may transmit signals via appropriate apparatus for transmitting radio signals. In Figure 3, a transceiver apparatus is designated schematically by block 306. The transceiver apparatus 306 may be provided, for example, by means of a radio part and associated antenna arrangement. The antenna arrangement may be arranged internally or externally to the wireless device.

A wireless device is typically provided with at least one data processing entity 301, at least one memory 302 and other possible components 303 for use in software code and hardware aided execution of Tasks it is designed to perform, including control of access to and communications with access systems and other communication devices. The data processing, storage and other relevant control apparatus can be provided on an appropriate circuit board and/or in chipsets. This feature is denoted by reference 304. The user may control the operation of the wireless device by means of a suitable user interface such as keypad 305, voice commands, touch sensitive screen or pad, combinations thereof or the like. A display 308, a speaker and a microphone can be also provided. Furthermore, a wireless communication device may comprise appropriate connectors (either wired or' wireless) to other devices and/or for connecting external accessories, for example hands-free equipment, thereto.

3GPP has issued a number of releases (Rel) for defining operating communication protocols related to a communications network. Currently, objectives and work are being set in relation to Release 19 (Rel. 19).

The following describes scenarios in which an NF service consumer (NFc) delegates discovery and selection of an NF service producer to a Service Communication Proxy (SCP). Under this scenario the SCP issues a query to an NRF for service discovery and/or service subscription on behalf of an NFc.

As mentioned above, for some service requests, some additional authorization is used to check if an NFc is allowed to actually request the service from the NF service producer (NFp).

3GPP TS 33.500, clause 6.7.3 relates to the authorization of NF service access. As discussed therein, there are two alternative authorization mechanisms defined in 3GPP 33.501:

- Static authorization, which is based on local authorization policy at the NRF and the NF Service Producer (see clause 3GPP TS 33.501, 13.3.0);
- Token based authorization, when NRF acts as the Authorization Server and provides access (see 3GPP TS 33.501, clause 13.3.1).

The following focuses on examples in which an "access token" is requested from an authorization server (e.g.,

the NRF) that can be used to represent access rights of the NFc to receive a service from an NFp. This access token is then forwarded with a service request to an NFp when a service is being requested from the NFp. The NFp will check validity of the access token to determine whether to provide the NFc with the requested service. As mentioned above, the access token may comprise an OAuth2 access token.

Requested (and received) access tokens may be stored by the NFc for inclusion in subsequent service requests signalled to at least one NFp. Then, if the same access token is used for some subsequent access request (e.g., because the same access rights are to be used for the , no further contact with the authorization server is performed and signalling can be saved. On another side, it is also already specified in standards that a "scope" might be provided for the authentication procedure. This scope may be used to check if the requested access can / will be granted for this specific scope. Currently, only few of these "scopes" are defined. These are illustrated in the following.

**As** mentioned above, an NFc and NFp may communicate directly or indirectly via an SCP. These are illustrated with respect to 3GPP TS 23.501 and TS 23.502 (for indirect communications), and 3GPP TS 33.501 and TS 29.500 (for service access authorizations). These are illustrated below.

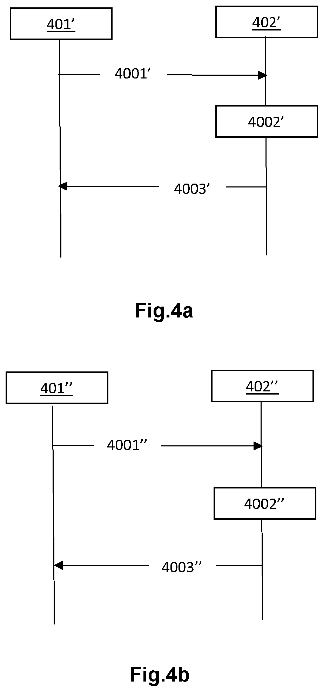

Figure 4A illustrates example signalling in which an NFc obtains an access token before an NF service is requested from an NFp.

Figure 4A illustrates signalling that may be performed between an NFc 401' and an authorisation server 402'. The authorisation server may be, for example, an NRF.

During 4001', the NFc 401' signals the authorisation server 402'. This signalling may comprise a request for an access token in respect of at least one service. For example, this signalling may comprise at least one NF service name, at least one NF type, an NF type of the NFc 401', and/or a client identifier. This signalling may comprise an Nnrf_AccessToken_GetRequest service operation.

**3GPP** TS 33.501 further discusses this signalling of 4001'. This document further discloses that the NF service consumer 401' requests an access token from an NRF associated with the same administrative domain (e.g., same Public Land Mobile Network (PLMN)) as the NF service consumer using an Nnrf_AccessToken_Get request operation. The message comprises NF Instance Id(s) of the NF service consumer, a requested "scope" (which may comprise an expected NF service name(s) and optionally "additional scope" information (e.g., requested resources and requested actions (service operations) on the resources)), NF type of the expected NF producer instance and NF consumer. The service consumer may also include a list of slice identifiers (e.g., network slice selection assistance information (NSSAI), and/or a list of network slice instance (NSI) identifiers for the expected NF producer instances). The message of 4001' may further comprise the NF Set ID of the expected NF Service Producer instances.

As specified in 3GPP TS 29.500, the requested access scope may correspond to an access scope level for accessing a given resource. This access scope may be, based on local configuration of the NF service producer (e.g., at least one of: the service name of the NF Service (this scope associated with this may grant generic access to a given application program interface (API), for those operations on resources that don't require a specific authorization, or both, the service name of the NF Service, and a string that uniquely represents the type of operation (e.g. create/modify/read), the resource and the service (these two scopes, together, may grant access to those operations on resources that utilise a specific authorization).

**TS** 29.500 further defines information elements comprised in the Access Token Request in clause 6.3.5.2.2. Table 2 (below) reproduces at least some of these definitions.

*Table 2 Information elements comprised in an access header*

| Attribute name | Data type | Cardinality | Description |
|---|---|---|---|
| grant_type | string | 1 | This information element may comprise the grant type as "client _ credentials". Enum: "client_credentials" |
| nfInstanceId | NfInstanceId | 1 | This information element may comprise the NF instance id of the NF service consumer. |
| nfType | NFType | 0..1 | This information element may be included when the access token request is for an NF type and not for a specific NF / NF service instance. When present, this information element may comprise the NF type of the NF service consumer. |

(continued)

| Attribute name | Data type | Cardinality | Description |
|---|---|---|---|
| targetNfType | NFType | 0..1 | This information element may be included when the access token request is for an NF type and not for a specific NF / NF service instance. When present, this information element may comprise the NF type of the NF service producer. |
| scope | string | 1 | This information element may comprise the scopes requested by the NF service consumer. The scopes may comprise a list of NF service name(s) of the NF service producer(s) or resource/operation-level scopes defined by each service application program interface (API), separated by whitespaces, as described in IETF RFC 6749, clause 3.3. The service name(s) included in this attribute may be any of the services defined in the ServiceName enumerated type (see clause 6.1.6.3.11 of TS 29.500). The resource/operation-level scopes may be any of those defined in the "securitySchemes" clause of each service API. |

During 4002', the authorisation server 402' authorises the NFc 401' and generates an access token for representing and/or determining at least one an access right of the NFc.

During 4003', the authorisation server 402' signals the NFc 401'. This signalling may comprise the access token generated during 4002'. This signalling may comprise an indication of when the access token comprised in the signalling will expire (e.g., become no longer valid). This signalling may comprise an Nnrf_AccessToken_GetResponse service operation.

Figure 4B illustrates example signalling in which an NFc uses an access token obtained during Figure 4A to request an NF service from an NFp.

Figure 4B illustrates signalling that may be performed between an NFc 401" and an NFp 402".

During 4001", the NFc 401" signals the NFp 402". This signalling may comprise the access token received during 4003'. This signalling may comprise an NF service request (e.g., a request for the NFc 401" to be provided with an NF service from the NFp 402").

During 4002", the NFp 402" verifies the integrity of the access token and claims in the access token. When successfully verified, the NFp 402" determines to execute the service requested during 4001".

During 4003", the NFp 402" signals the NFc 401". This signalling may comprise a response to the signalling of 4001". This signalling may indicate that the NFc 401" has been granted the requested service when the verification of 4002" is successful. This signalling may indicate that the NFc 401" has not been granted the requested service when the verification of 4002" is unsuccessful.

When using indirect communication with delegated discovery, the NFc delegates the discovery and selection of the NFp to the SCP. The SCP may also be responsible for requesting an access token on behalf of the NFc to the OAuth2 authorization server (where this type of authorisation is used).

As specified in clause 13.4.1 of 3GPP TS 33.501, OAuth 2.0 (see IETF RFC 6749) may be used for authorization of NF service access. All NFs and the NRF may support the OAuth 2.0 authorization framework with "Client Credentials" grant type as specified in clause 4.4 of IETF RFC 6749, except that there is no "Authorization" HTTP request header in the access token request.

The NRF may act as the Authorization Server providing "Bearer" access tokens (IETF RFC 6750) to the NF service consumers to access the services provided by the NF service providers.

When an NF service (e.g., an API) receives an OAuth 2.0 access token in the "Authorization" Hypertext Transfer Protocol (HTTP) request header field, the NF service may validate the access token, its expiry and its access scope before allowing access to the requested resource, as specified in clause 7 of IETF RFC 6749.

The access scope used to get access to a given resource may be based on local configuration of the NF service producer, such as at least one of:

• the service name of the NF Service; this scope grants generic access to a given API, for those operations on resources that don't require a specific authorization, or

- both the service name of the NF Service and a string that uniquely represents the type of operation (e.g. create/modify/read), the resource and the service; those two scopes, together, grant access to those operations on resources that require a specific authorization.

The NF Service consumer may comprise any specific discovery and selection parameters that are to be fulfilled by the NFp to allow the SCP to find a suitable producer that fulfils these discovery and selection parameters in its service request to the SCP. The may SCP use the request address and the discovery and selection parameters in the request message to route the service request to the selected producer instance. Additionally, the NFc may provide a header in the service request sent to the SCP that comprises the access scope(s) to be used for authorizing the service request. The header may be, for example, a 3gpp-Sbi-Access-Scope header. For example, this header may be a header that comprises a value that corresponds to the service-level scope (of the 5GC API/service of the service request) and, if any additional scope is defined for the specific resource/operation of the service request in the corresponding 5GC API, the resource/operation-level scope. This enables the SCP to know for which scopes the SCP is to request an access token request to the NRF (assuming no access token is available yet that matches these scopes). The SCP can return the obtained access token in the service response to the NFc for possible reuse of the access token in subsequent service requests.

The current form of the access scope, which is described in 3GPP TS 29.500, is provided below. It is understood, however, that the form of the access scope may change as the standards develop, and that an access scope of an NFc may be generally understood to comprise a parameter that represents a scope (or degree) of an access right of an NFc.

3GPP TS 29.500, Clause 5.2.3.2.16 defines the header "3gpp-Sbi-Access-Scope", which is used in a service request for indirect communication to indicate the access scope of the service request for NF service access authorization (with further reference to clauses 6.7.3 and 6.10.11. The encoding of this header currently follows the Augmented Backus-Naur Form (ABNF) defined in IETF RFC 7230.

The header may comprise a Scope-Token that is defined as:

$$\text{Scope-token} = 1*\text{NQCHAR}$$

The Scope-token may comprise a list of space-delimited, case-sensitive strings, containing the NF service name of the NF service producer corresponding to the service request and, if defined for the specific resource/operation in the corresponding API, an additional resource/operation-level scope.

NQCHAR is defined in Appendix A (A.4) of IETF RFC 6749. NQCHAR corresponds to the "scope" syntax defined for OAuth in clauses 3.3 and A.4 of IETF RFC 6749 and also to the syntax of the "scope" parameter in Access-TokenReq in 3GPP TS 29.510. The use of NQCHAR enables the SCP to set the scope parameter in the Nnrf_Get Access Token Request to the value of the 3gpp-Sbi-Access-Scope header received in an incoming service request, or to a list of scopes that is the intersection of the scopes indicated in the 3gpp-Sbi-Access-Scope header and the scopes expected by the NF Service producer (as registered in the NFp's NF profile at the NRF).

For indirect communication with delegated discovery (see clause TS 33.50, clause 6.10.11.2), for a specific resource / operation for which the API defines a resource/operation-level scope, the NF service consumer does not and need not know whether the NF service producer is configured to require the resource/operation level scope or not. The setting of the 3gpp-Sbi-Access-Scope header may be the same regardless of whether or not the NF service producer is configured to require the resource/operation level scope.

3GPP TS 33.500, clause 6.10.11.2 describes authorization for indirect communication with delegated discovery. According to this clause, when the NF service consumer is configured to use delegated service discovery, requirements in clause 13.4.1.3.2 of 3GPP TS 33.501 apply with the following additions.

When the NF service consumer received an access token in a previous service response that is valid for the new service request, the NF service consumer may comprise this access token in the Authorization header in the service request. An access token received in a previous service response is valid for the new service request when:

- The access token has a matching scope, or the access token has a matching service-level scope only (e.g., the new service request also uses a resource/operation-level scope that is not present in the scope of the access token received in the previous service response);
- The access token has a matching audience (e.g., matching producer's NF type or NF instance ID);
- The access token has a matching producer's NF set ID, S-NSSAI, NSI and PLMN identifier, when the access token comprises a producer NF set ID, S-NSSAI, NSI and PLMN ID respectively; and
- The access token has not expired.

When the NF service consumer has multiple cached access tokens that are valid for a service request, it is left for implementation how to select the access token to include in the request. Access tokens with a matching scope, if any, are to be used in preference to access tokens with a matching service-level scope only.

Including an access token that has a matching service-level scope only but not a matching resource/operation-level scope enables the reuse of the access token when the NF service producer is not configured to require the resource/operation-level scope.

When the NF service consumer does not comprise an access token in the service request, or when it does, but the access token has a matching service-level scope only and not a matching resource/operation-level scope, or when does but the access token is NF instance specific and reselection of a different producer instance may apply at the SCP (e.g. a routing binding header or a discovery header provides the producer's NF set ID), the NF service consumer may comprise in the service request:

- the NF service discovery factors to be used by the SCP for the Service access authorization procedures, as specified in 3GPP TS 33.500 clause 6.10.3.2; and
- the 3gpp-Sbi-Access-Scope header indicating the access scope of the service request for access authorization, as defined for the specific resource/operation in the corresponding API (see 3GPP TS 33.500 clause 5.2.3.2.16).

The NF service consumer may also comprise its Client Credentials Assertion in the service request, as described in 3GPP TS 33.500, clause 6.7.5.

The SCP may use the access scope information received in the 3gpp-Sbi-Access-Scope header to determine the access scope required for access authorization for an incoming service request. The SCP may also use the scopes used by the NF service producer (as registered in NFp's NF profile at the NRF) for this determination and, if a new access token is required, request an access token to the NRF for a list of scopes that is the intersection of the scopes indicated in the 3gpp-Sbi-Access-Scope header and the scopes expected by the NF Service producer.

When the NF service consumer has included an access token in the service request without including the 3gpp-Sbi-Access-Scope header, or when the SCP has a cached granted access token that matches the service request, the SCP may reuse the available access token. When the NF service consumer has included an access token in the service request and the 3gpp-Sbi-Access-Scope header, the 3gpp-Sbi-Access-Scope header comprises multiple scopes, and the access token has a matching scope only for a subset of the scopes present in the 3gpp-Sbi-Access-Scope header, the SCP should consider that the access token has a valid scope for the service request if the NF service producer does not use any scope not granted in the Access Token (as determined from its NF profile); otherwise, the SCP may request a new access token for the service request.

This process may enable an SCP to consider that an access token has a valid scope when the 3gpp-Sbi-Access-Scope header comprises a service-level scope and a resource/operation-level scope, the access token has a scope matching only the service-level scope, and the NF service producer is not configured to require the resource/operation-specific scope.

When the NRF receives a request to obtain an access token for a list of scopes, but the NF service producer's profile does not allow to grant a token for all the requested scopes, the NRF may grant an access token but restricted to the allowed scope, unless the request cannot be authorized for other reasons. This process may enable the NRF to grant an access token for a service-level scope, in response to an access token request for a list of scopes including a service-level scope and a resource/operation-level scope, when the NF service producer's profile is not configured to require the resource/operation-level scope.

When the SCP requests an access token for a service request, the SCP may comprise the access token it has obtained from the NRF in the service response it forwards to the NF service consumer, by including the 3gpp-Sbi-Access-Token header, for possible re-use in subsequent service requests by the NF service consumer. The NF service consumer stores the access token received in a service response and uses it in subsequent service requests in a similar way to as described above.

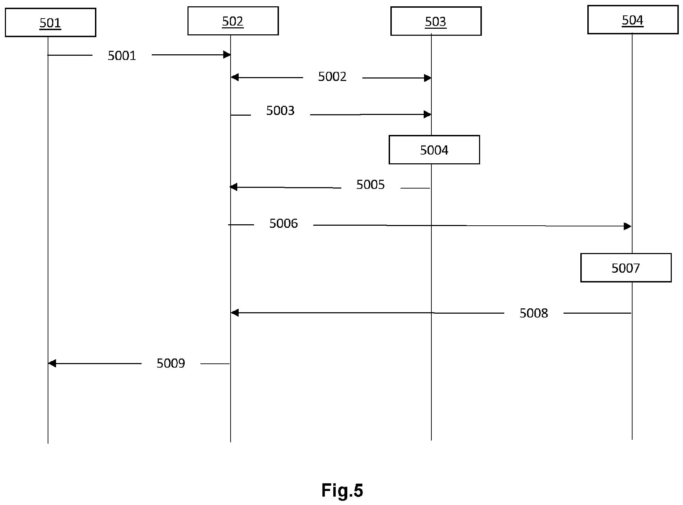

Indirect communication with an SCP is illustrated with respect to Figure 5, which illustrates signalling described in 3GPP TS 33.501. This process may relate to an authorization and service invocation procedure for indirect communication with delegated discovery.

Figure 5 illustrates signalling that may be performed between an NFc 501, an SCP 502, an NRF 503, and an NFp 504.

During 5001, the NFc 501 signals the SCP 502. This signalling may comprise a service request. This service request may comprise a client credentials assertion (CAA) of the NFc 501 (as defined in clause 13.3.8 of TS 33.501. The NF Service Consumer may comprise an access token in the service request if it has received an access token in a previous service response. If a previously received access token has expired, the NF Service Consumer may include discovery parameters in the service request for enabling the SCP to discover an NFp (e.g., as specified in TS 29.500 clause 5.2.3.2.7). When the CCA is included, the NF type of the expected audience in CCA may comprise parameters and/or values designating "NRF" and "NF Service Producer".

5002 to 5005 relate to the SCP 502 performing a discovery procedure for identify the NFp 504 as being an NF instance that may provide the NFc 501 with the service requested in the service request of 5001 and to obtaining an access token for indicating whether the NFc 501 is allowed to access that NFp. It is understood that these steps do not necessarily have to be performed. For example, when the NF Service Consumer has included an access token in the signalling of 5001, and/or when the SCP 502 has a cached granted access token that may be used for the NFc 501, then the SCP 502 may reuse any of these access token and proceed to 5006 instead of performing 5002 to 5005.

During 5002, the SCP 502 exchanges signalling with the NRF 503. This signalling may relate to a service discovery for discovering at least one NFp that can provide the service requested during 5001.

During 5003, the SCP 502 signals the NRF 503. This signalling may comprise a request for an access token. For example, the SCP 502 may send an access token request (Nnrf AccessToken_Get Request) to the NRF during 5003. The access token request may comprise parameters as defined in clause 13.4.1.1 of 3GPP TS 33.501. The signalling of 5003 may comprise the NFc's CCA when this is received during 5001.

During 5004, the NRF 503 authenticates NFc 501. This authentication may be performed by, for example, using one of the methods described in TS 33.501, clause 13.3.1.2. For example, this authentication/validation may be performed using the CCA when this is provided during 5003. When the NFc authentication is successful and NFc is authorized based on the NRF policy, the NRF issues an access token. This access token may be issued as described in, for example, 3GPP TS 33.501, clause 13.4.1.1. The NRF may use the NF Service Consumer instance identifier as the subject of the access token.

During 5005, the NRF 503 signals the SCP 502. This signalling may comprise the access token generated during 5004. This signalling may comprise an access token response (e.g., an Nnrf_AccessToken_Get Response signalling operation).

During 5006, the SCP signals the NFp 504. This signalling may comprise a service request. The service request may comprise an access token (e.g., an access token received during 5001 and/or during 5005). The service request may comprise the NFc's CCA when the CCA is received during 5001.

During 5007, the NFp 504 may authenticate the NFc 501. This may be performed in any of a plurality of different ways (e.g., by at least one of the methods described in 3GPP TS 33.501, clause 13.3.2.2). When the NFc 501 is successfully authenticated by the NFp 504, the NFp 504 validates the access token received during 5006. This may be performed in any of a plurality of different ways (e.g., by at least one of the methods described in 3GPP TS 33.501, clause 13.4.1.1. When the validation of the access token is successful, the NFp 504 proceeds to 5008.

During 5008, the NFp 504 signals the SCP 502. This signalling may comprise a service response. This signalling may be a response to the signalling of 5006.

During 5009, the SCP 502 signals the NFc 501. This signalling may forward the service response received during 5008 to the NFc 501. The SCP may comprise the access token in the service response to NFc for possible reuse in subsequent service requests.

With delegated discovery, SCP is tasked to request the access token on behalf of NFc. Stated differently, the SCP only knows which scopes are required to serve a service because of the 3gpp-Access-Scope the SCP receives from NFc. The SCP therefore only requests these scopes received in 3gpp-Access-Scope to the NRF. If any of these requested scopes are not granted, the SCP rejects the service request.

The Groupe Spécial Mobile Association (GSMA) has recently requested that many new types of the above mentioned "scopes" for the authentication procedure are introduced in order to organize the authentication procedure in higher granularity.

Related to this, in 3GPP, contributions have just been approved to add many of these newly defined "scopes". For example, based on GSMA request, 3GPP is in the process of defining more granular OAuth2 scopes in 3GPP Rel-18, to strengthen the security of the 5GC e.g., by. defining additional resource and/or operation level scopes. According to recent submissions, whether to use OAuth2 or not, and if yes, which scopes to use, are up to operators to decide.

As another example, more than 30 new additional scopes have been suggested for enabling an operator to provide fine grained authorizations to access specific resource/operations of the Unified Data Management Subscriber Data Management (UDM SDM) API (further functionality of the UDM SDM API is provided in 3GPP TS 29.503).

The existing service access authorization procedures defined for indirect communication with delegated discovery does not allow though to request and obtain access tokens with additional resource/operation-level scopes than the specific resource/operation-level scope of the service request. More specifically, the 3gpp-Sbi-Access-Scope header may comprise the scopes to be used for authorizing the specific service request (e.g., the service-level scope, and if the 5GC API defines a resource/operation specific scope for the service operation invoked in the service request, this resource/operation specific scope). For example, as discussed above, the SCP may use the access scope information received in the 3gpp-Sbi-Access-Scope header to determine the access scope required for access authorization for an incoming service request.

When the SCP cannot obtain an access token with all the scopes indicated in the 3gpp-Sbi-Access-Scope header, the SCP rejects the service request.

Accordingly, the access token that is obtained by the SCP and passed back in the service response to the NFc can only be reused for subsequent service requests that do not require different resource/operation level scopes than the resource/operation level scope of the initial service request for which the access token was requested. This results in massive signaling from the SCP to the NRF to obtain new access tokens for service requests requiring different scopes of the same API.

Stated differently, the requested (and received) access tokens will only be valid for further requests with exactly these "scope(s)". This means that the storing of a token for a further service request will in most of the times not work anymore, as the "scopes" may differ (although the "actual core of the request" stays the same). This will lead to an increase in signaling because the SCP will much more often need to request a new access token, in cases where, currently, a previously received access token could simply be used again.

To address at least one of the above issues, the following proposes to extend the delegated discovery procedure such that the SCP may be enabled to request (and then forward to the NFc) an access token not only for the "scope" specified in the service request from the NFc, but also for other additional "scopes".

Further, the NFc may, using a newly specified header (labelled as the "3gpp-Sbi-Additional-Access-Scopes" header herein) directly indicate in a service request to the SCP that the NFc is interested in obtaining access token for scopes for potential future service requests in addition to the actual "scopes" for the current service request.

There is further introduced the option for new "wildcard scope" information to be added into the service request for requesting (and receiving) at least one access token for all "scopes". The "wildcard scope" request may comprise a request to receive all possible scopes that are provided by an NFp that is allowed for the NFc (e.g., that is allowed to be provided to the NFc.

For example, in indirect communication with delegated discovery, upon receipt of an incoming service request at an SCP when no access token is available to enable authorizing the serving request at an NFp, the SCP may request an access token for the NFc from the NRF. This request may request a plurality of scopes, including the scope(s) specifically for authorizing the incoming service request and additional scopes not related to authorizing the incoming service request (e.g., which may be useful for authorizing subsequent service requests issued by the NFc). The SCP may cache and/or return the access token obtained from the NRF to the NFc when forwarding the service response to the NFc. The NFc may cache at least one access token received in the service response. The NFc and/or SCP may reuse the cached access token(s) for authorizing subsequent service requests associated with at least one of said additional scope(s) granted in the access token.

Although the previous paragraph relates to an example in which the NRF grants at least one access token associated with scopes specified in the access token request, it is understood that this is not limiting. For example, the NRF may be configured to grant, in access tokens, all the scopes allowed to the NFc by the NFp as registered in the NFp profile, regardless of the scopes requested to be granted in the access token request.

When receiving an access token response with an access token from the NRF, the SCP checks whether the access token grants all the scopes to be used for authorizing the incoming service request. When the access token grants all of the scopes to be used, the SCP forwards the service request with the access token obtained from the NRF to the NFc.

A failure to obtain an access token for the additional scopes not used for authorizing the service request does not result in the SCP rejecting the request. Instead, the SCP may proceed with submitting the service request to the NFp with the obtained access token, if the access token was granted for all the scopes used for the service request.

Otherwise, when the NRF does not authorize all the scopes required for the service request but authorizes at least one additional scope indicated in the 3gpp-Sbi-Additional-Access-Scopes, the SCP may reject the service request to the NFc, but nevertheless include the access token obtained from the NRF in the service rejection response to the NFc to enable the NFc to cache the actually granted access token.

The SCP may determine the list of scopes required for authorizing the incoming service request as being at least one of the scopes received in the 3gpp-Sbi-Access-Scope header in the service request received from the NFc, or the intersection of the scopes received in the 3gpp-Sbi-Access-Scope header in the service request received from the NFc and the scopes allowed to the NFc by the NFp (as registered in the NFp profile discovered by the SCP from the NRF).

The SCP may determine the additional scopes not used for authorizing the incoming service request as being at least one of: the scope(s) received in a new 3gpp-Sbi-Additional-Access-Scopes header in the service request received from the NFc, the scope(s) allowed to the NFc by the NFp as registered in the NFp profile discovered by the SCP from the NRF, other than those listed in the 3gpp-Sbi-Access-Scope header, or any intersection of the above lists.

The SCP may be configured by the operator to request at least one access token from the NRF with a new "wildcard scope" information indicating a request for all possible scopes supported by the NFp.

To enable at least one of the above features to be implemented, there is provided a new 3GPP custom HTTP header (called "3gpp-Sbi-Additional-Access-Scopes" herein). This new header may enable the NFc to indicate, in its service request to the SCP, additional access scopes that are desired to be obtained with the access token in addition to the scopes indicated in the 3gpp-Sbi-Access-Scope, when requesting an Access Token to the NRF, but that are not used for the service request itself. An access token that already allows for additional access scopes could be used for subsequent requests.

There is further defined a new "wildcard scope" information that may be provided in any of the Access Token Request, Access Token Response, Access Token, and/or in the 3gpp-Sbi-Additional-Access-Scopes". This may be defined as a new information element in the access token request, or as a new wildcard scope for each 5GC API that grants authorization to access all service operations of an API. This latter scope may be labelled as "<service name>-wildcard", where <service name> represents an associated 5GC API for that scope.

The semantic and handling by the SCP of the existing 3gpp-Sbi-Access-Scope and the new 3gpp-Sbi-Additional-Access-Scopes headers may be different. Stated differently, 3gpp-Sbi-Additional-Access-Scopes may not be a mere extension of the existing 3gpp-Sbi-Access-Scope header.

To illustrate features of the above, the following provides several examples that show example signalling between entities described herein. It is understood that, except where mentioned differently, the features of these examples that are labelled in the same way as Figures 4 to 5 comprise analogous features.

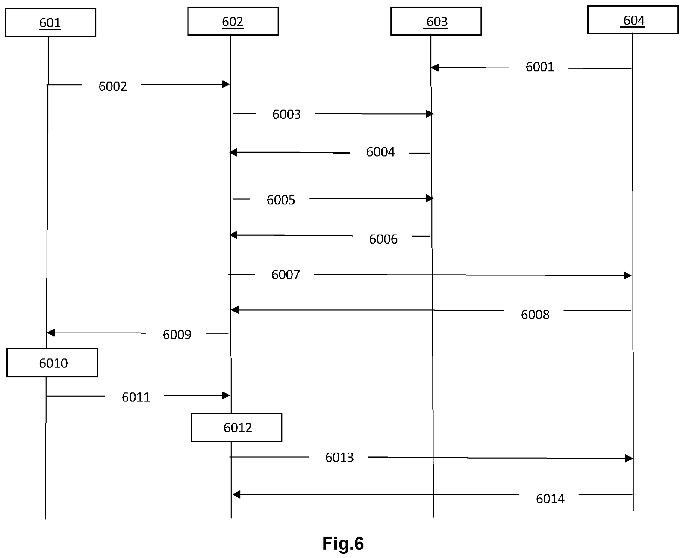

Figure 6 illustrates example signalling between an NFc 601, an SCP 602, an NRF 603, and an NFp 604. This example of Figure 6 illustrates example enhanced service access authorisation using the new custom header (e.g., 3gpp-Sbi-Additional-Access-Scopes).

During 6001, the NFp 604 signals the NRF 603. This signalling may comprise a request for registering properties and/or parameters of the NFp 604 in a profile maintained by the NRF 603 for the NFp 604. For example, in the present example, the profile may comprise an indication of at least one scope that the NF service producer is able to provide to an NF service consumer. For example, the NFp 604 may register with the NRF 603 that the NFp 604 is able to provide scopes S, W, X, and Y to an NF service consumer.

During 6002, the NFc 601 signals the SCP 602. This signalling may comprise a service request (e.g., a request to be provided with a service from a service producer). This signalling may not comprise an access token.

This signalling may comprise a first header portion that specifies at least one scope that is associated with the service being requested (e.g., labelled as Scopes S and W in the following). For example, the at least one scope may comprise a service level scope (S) and/or a resource/operation scope (W). This first header portion may comprise, for example, a 3GPP-Sbi-Access-Scope portion.

This signalling may comprise a second header portion that specifies at least one additional scope (e.g., labelled as X, Y, and Z in the following). This second header portion may comprise, for example, a 3GPP-Sbi-Additional-Access-Scopes portion.

During 6003, the SCP 602 signal the NRF 603. This signalling may comprise an NF discovery request for identifying at least one NF service producer that is able to provide the service requested in the service request of 6002.

During 6004, the NRF 603 signals the SCP 602. This signalling may comprise an NF discovery response. For example, the signalling may comprise at least a part of an NF profile for NFp that indicates allowed operations per NF type and/or per NF instance. For example, this signalling may indicate that the NFp is able to provide scopes S, W, X, and Y to NF service consumers.

During 6005, the SCP 602 signals the NRF 603. This signalling may comprise an access token request. This signalling may comprise a request for an access token for scopes S, W, X, Y, and Z. This signalling may comprise at least one indication that indicates which of these scopes are for the actual service being requested (e.g., S and W), and which of these scopes are not for the actual service being requested (e.g., X, Y, and Z).

During 6006, the NRF 603 signals the SCP 602. This signalling may comprise an access token response. This signalling may comprise an access token. This access token may comprise a token for scopes S, W, X, and Y (e.g., the scopes that NFp 604 is registered as being able to provide to an NF service consumer in NFp's profile at the NRF that overlap with the requested scope(s) of 6005). This signalling may comprise an indication of which scope(s) are available via this access token.

During 6007, the SCP 602 signals the NFp 604. This signalling may comprise a service request on behalf of the NFc 601. This signalling may comprise the access token received during 6006.

During 6008, the NFp 604 signals the SCP 602. This signalling may comprise an indication that the service request of 6007 was successful.

During 6009, the SCP 602 signals the NFc 601. This signalling may comprise an indication that the service request has been successful. This signalling may comprise the access token of 6006. This signalling may comprise an indication of which scope(s) are available via this access token. For example, this signalling may comprise a 3gpp-Sbi-Access-Token, and indicate that this access token is valid for scopes S, W, X, and Y. The NFc 601 may cache this access token. The NFc 601 may receive the service with scopes S and W from the NFp 604 subsequent to this successful establishment.

During 6010, the NFc 601 determines to request a new service that utilises a resource and/or operation defined with additional scope Y.

During 6011, the NFc 601 signals the SCP 602. This signalling may comprise a service request. This service request may comprise a service request in respect of scope Y. For example, this signalling may comprise a service request for service-level scope S with resource and/or operation scope Y. This signalling may comprise a 3gpp-Sbi-Access-Scope. This signalling may comprise an explicit indication of scope S and scope Y.

For all of the examples discussed herein, the NFc may determine when to include the additional scope request (e.g., for scopes S and Y) in any of a plurality of different ways. For example, an NFc may include the additional scopes in its service request in scenarios where the SCP may need to request a new access token, e.g. when no valid access token is available at the NFc (so no access token can be included in the service request sent to SCP), for example, in scenarios where the NFc delegates any request retransmission to the SCP (e.g., when an NFp targeted by the request would not be available). These scenarios involve similar conditions as to when an NFc inserts the existing 3gpp-Sbi-Access-Scope, which is defined in 3GPP TS 29.500.

For example, according to 3GPP TS 29.500, when the NF service consumer does not comprise an access token in the service request, or when the NF service consumer does comprise an access token but the access token has a matching service-level scope only (but not a matching resource/operation-level scope), or if the access token is NF instance specific and reselection of a different producer instance may apply at the SCP (e.g. a routing binding header or a discovery header provides the producer's NF set identifier), the NF service consumer may include in the service request to the SCP: the NF service discovery factors to be used by the SCP for the Service access authorization procedures (as specified in clause 6.10.3.2 of 3GPP TS 29.500); and the 3gpp-Sbi-Access-Scope header indicating the access scope of the service request for access authorization, as defined for the specific resource/operation in the corresponding API (see clause 5.2.3.2.16 of 3GPP TS 29.500).

During 6012, the SCP 602 determines that the SCP 602 does not need to signal discovery and/or access token requests as the access token received during 6006 is able to be used for service being requested during 6011. The SCP 602 may make this determination based on a previous caching of the access token received during 6006 at the SCP 602. The SCP 602 may make this determination based on receipt of the access token in the service request of 6011.

Subsequent to this determination, during 6013, the SCP 602 signals a service request for scopes S and Y to the NFp 604.

During 6014, the NFp 604 signals the SCP 602. This signalling may indicate that the service request of 6013 was successful. This indication that the service request was successful may be forwarded (not shown) to the NFc 601. The NFc 601 may receive the service with scopes S and Y from the NFp 604 subsequent to this successful establishment.

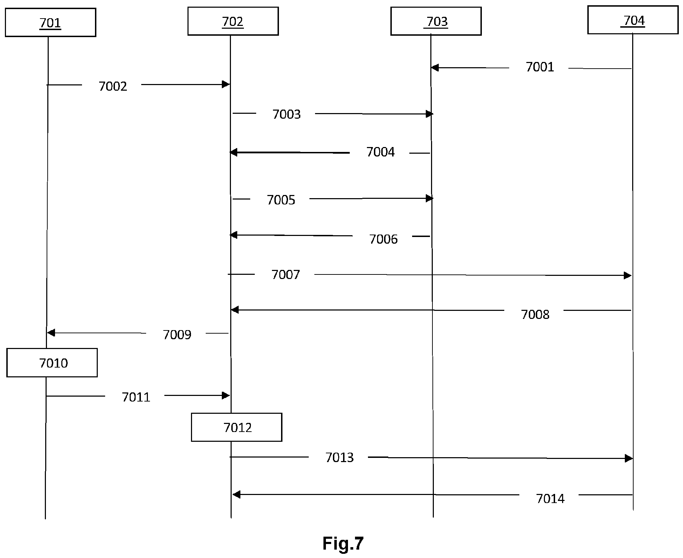

Figure 7 illustrates an example in which the SCP determines to request a wildcard scope.

Figure 7 illustrates example signalling between an NFc 701, an SCP 702, an NRF 703, and an NFp 704. This example of Figure 7 illustrates example enhanced service access authorisation with the SCP configured to request an access token for all scopes allowed by NFp to NF service consumers or a wildcard scope.

During 7001, the NFp 704 signals the NRF 703. This signalling may comprise a request for registering properties and/or parameters of the NFp 704 in a profile maintained by the NRF 703 for the NFp 704. For example, in the present example, the profile may comprise an indication of at least one scope that the NF service producer is able to provide to an NF service consumer. For example, the NFp 704 may register with the NRF 703 that the NFp 704 is able to provide scopes S, W, X, and Y to an NF service consumer.

During 7002, the NFc 701 signals the SCP 702. This signalling may comprise a service request (e.g., a request to be provided with a service from a service producer). This signalling may not comprise an access token.

This signalling may comprise a first header portion that specifies at least one scope that is associated with the service being requested (e.g., labelled as Scopes S and W in the following). For example, the at least one scope may comprise a service level scope (S) and/or a resource/operation scope (W). This first header portion may comprise, for example, a 3GPP-Sbi-Access-Scope portion.

During 7003, the SCP 702 signal the NRF 703. This signalling may comprise an NF discovery request for identifying at least one NF service producer that is able to provide the service requested in the service request of 7002.

During 7004, the NRF 703 signals the SCP 702. This signalling may comprise an NF discovery response. For example, the signalling may comprise at least a part of an NF profile for NFp that indicates allowed operations per NF type and/or per NF instance. For example, this signalling may indicate that the NFp is able to provide scopes S, W, X, and Y to NF service consumers.

During 7005, the SCP 702 signals the NRF 703. This signalling may comprise an access token request. This signalling may comprise a request for an access token for scopes S, W, X, Y, and Z, or request a wildcard scope (e.g., a request for all scopes that are registered as being provided by the NFp that are allowed to be received by the NFc). When an indication of specific scopes is comprised in the signalling of 7005, the signalling may comprise at least one indication that indicates which of these scopes are for the actual service being requested (e.g., S and W), and/or which of these scopes are not for the actual service being requested (e.g., X, Y, and Z).

During 7006, the NRF 703 signals the SCP 702. This signalling may comprise an access token response. This signalling may comprise an access token. This access token may comprise a token for scopes S, W, X, and Y (e.g., all of the scopes that NFp 704 is registered as being able to provide to an NF service consumer in NFp's profile at the NRF and that is allowed to be provided to the NFc 701). This signalling may comprise an indication of which scope(s) are available via this access token. Stated differently, this signalling may comprise an identification of which scope(s) are available via this access token.

During 7007, the SCP 702 signals the NFp 704. This signalling may comprise a service request on behalf of the NFc 701. This signalling may comprise the access token received during 7006. This access token may indicate at least scopes S, W, X, and Y.

During 7008, the NFp 704 signals the SCP 702. This signalling may comprise an indication that the service request of 7007 was successful.

During 7009, the SCP 702 signals the NFc 701. This signalling may comprise an indication that the service request has been successful. This signalling may comprise the access token of 7006. This signalling may comprise an indication of which scope(s) are available via this access token. For example, this signalling may comprise a 3gpp-Sbi-Access-Token, and indicate that this access token is valid for scopes S, W, X, and Y. The NFc 701 may cache this access token. The NFc 701 may receive the service with scopes S and W from the NFp 704 subsequent to this successful establishment.

During 7010, the NFc 701 determines to request a new service that utilises a resource and/or operation defined with additional scope Y.

During 7011, the NFc 701 signals the SCP 702. This signalling may comprise a service request. This service request may comprise a service request in respect of scope Y. For example, this signalling may comprise a service request for service-level scope S with resource and/or operation scope Y. This signalling may comprise a 3gpp-Sbi-Access-Scope. This signalling may comprise an explicit indication of scope S and scope Y.

During 7012, the SCP 702 determines that the SCP 702 does not need to signal discovery and/or access token requests as the access token received during 7006 is able to be used for service being requested during 7011. The SCP 702 may make this determination based on a previous caching of the access token received during 7006 at the SCP 702. The SCP 702 may make this determination based on receipt of the access token in the service request of 7011.

Subsequent to this determination, during 7013, the SCP 702 signals a service request for scopes S and Y to the NFp 704.

During 7014, the NFp 704 signals the SCP 702. This signalling may indicate that the service request of 7013 was successful. This indication that the service request was successful may be forwarded (not shown) to the NFc 701. The NFc 701 may receive the service with scopes S and Y from the NFp 704 subsequent to this successful establishment.

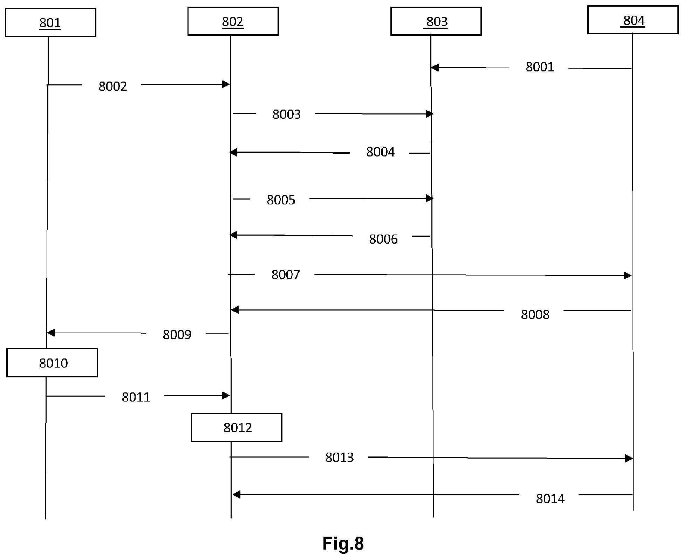

Figure 8 illustrates example signalling between an NFc 801, an SCP 802, an NRF 803, and an NFp 804. This example of Figure 8 illustrates example enhanced service access authorisation where, regardless of which scopes are requested as part of an access token request signalled by the SCP, the authorisation server (e.g., the NRF) provides an access token that covers more scopes that the scopes requested in the access token request.

During 8001, the NFp 804 signals the NRF 803. This signalling may comprise a request for registering properties and/or parameters of the NFp 804 in a profile maintained by the NRF 803 for the NFp 804. For example, in the present example, the profile may comprise an indication of at least one scope that the NF service producer is able to provide to an NF service consumer. For example, the NFp 804 may register with the NRF 803 that the NFp 804 is able to provide scopes S, W, X, and Y to an NF service consumer.

During 8002, the NFc 801 signals the SCP 802. This signalling may comprise a service request (e.g., a request to be provided with a service from a service producer). This signalling may not comprise an access token.

This signalling may comprise a first header portion that specifies at least one scope that is associated with the service being requested (e.g., labelled as Scopes S and W in the following). For example, the at least one scope may comprise a service level scope (S) and/or a resource/operation scope (W). This first header portion may comprise, for example, a 3GPP-Sbi-Access-Scope portion.

During 8003, the SCP 802 signal the NRF 803. This signalling may comprise an NF discovery request for identifying at least one NF service producer that is able to provide the service requested in the service request of 8002.

During 8004, the NRF 803 signals the SCP 802. This signalling may comprise an NF discovery response. For example, the signalling may comprise at least a part of an NF profile for NFp that indicates allowed operations per NF type and/or per NF instance. For example, this signalling may indicate that the NFp is able to provide scopes S, W, X, and Y to NF service consumers.

During 8005, the SCP 802 signals the NRF 803. This signalling may comprise an access token request. This signalling may comprise a request for an access token for the scopes associated with the requested server (e.g., scopes S and W). This signalling may comprise at least one indication that indicates which of these scopes are for the actual service being requested (e.g., S and W). This signalling may not indicate any other scopes than those explicitly indicated as being for the requested service. Stated differently, this access token request may only indicate those scopes that are to be used as part of the requested service.

During 8006, the NRF 803 signals the SCP 802. This signalling may comprise an access token response. This signalling may comprise an access token. This access token may comprise a token for scopes S, W, X, and Y (e.g., for more than the requested scopes, such as all of the scopes that NFp 804 is registered as being able to provide to an NF service consumer in NFp's profile at the NRF that overlap with the requested scope(s) of 8005). This signalling may comprise an indication of which scope(s) are available via this access token (e.g., an indication that explicitly identifies which scope(s) are available via the access token).

During 8007, the SCP 802 signals the NFp 804. This signalling may comprise a service request on behalf of the NFc 801. This signalling may comprise the access token received during 8006.

During 8008, the NFp 804 signals the SCP 802. This signalling may comprise an indication that the service request of 8007 was successful.

During 8009, the SCP 802 signals the NFc 801. This signalling may comprise an indication that the service request has been successful. This signalling may comprise the access token of 8006. This signalling may comprise an indication of which scope(s) are available via this access token. For example, this signalling may comprise a 3gpp-Sbi-Access-Token, and indicate that this access token is valid for scopes S, W, X, and Y. The NFc 801 may cache this access token. The NFc 801 may receive the service with scopes S and W from the NFp 804 subsequent to this successful establishment.

During 8010, the NFc 801 determines to request a new service that utilises a resource and/or operation defined with additional scope Y.

During 8011, the NFc 801 signals the SCP 802. This signalling may comprise a service request. This service request may comprise a service request in respect of scope Y. For example, this signalling may comprise a service request for service-level scope S with resource and/or operation scope Y. This signalling may comprise a 3gpp-Sbi-Access-Scope. This signalling may comprise an explicit indication of scope S and scope Y.

During 8012, the SCP 802 determines that the SCP 802 does not need to signal discovery and/or access token requests as the access token received during 8006 is able to be used for service being requested during 8011. The SCP 802 may make this determination based on a previous caching of the access token received during 8006 at the SCP 802. The SCP 802 may make this determination based on receipt of the access token in the service request of 8011.

Subsequent to this determination, during 8013, the SCP 802 signals a service request for scopes S and Y to the NFp 804.

During 8014, the NFp 804 signals the SCP 802. This signalling may indicate that the service request of 8013 was successful. This indication that the service request was successful may be forwarded (not shown) to the NFc 801. The NFc 801 may receive the service with scopes S and Y from the NFp 804 subsequent to this successful establishment.

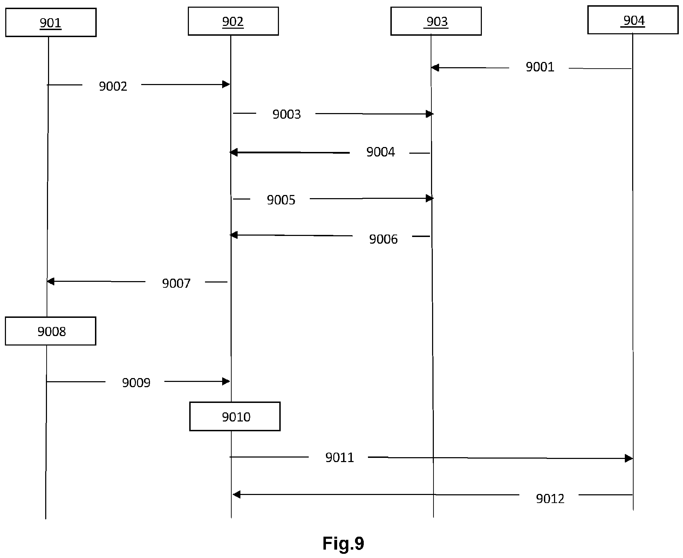

Figure 9 illustrates an example in which the NF producer does not provide all of the scopes associated with the service being requested.

Figure 9 illustrates example signalling between an NFc 901, an SCP 902, an NRF 903, and an NFp 904. This example of Figure 9 illustrates example enhanced service access authorisation using the new custom header (e.g., 3gpp-Sbi-Additional-Access-Scopes).

During 9001, the NFp 904 signals the NRF 903. This signalling may comprise a request for registering properties and/or parameters of the NFp 904 in a profile maintained by the NRF 903 for the NFp 904. For example, in the present example, the profile may comprise an indication of at least one scope that the NF service producer is able to provide to an NF service consumer. For example, the NFp 904 may register with the NRF 903 that the NFp 904 is able to provide scopes S, X, and Y to an NF service consumer.

During 9002, the NFc 901 signals the SCP 902. This signalling may comprise a service request (e.g., a request to be provided with a service from a service producer). This signalling may not comprise an access token.

This signalling may comprise a first header portion that specifies at least one scope that is associated with the service being requested (e.g., labelled as Scopes S and W in the following). For example, the at least one scope may comprise a service level scope (S) and/or a resource/operation scope (W). This first header portion may comprise, for example, a 3GPP-Sbi-Access-Scope portion.

This signalling may comprise a second header portion that specifies at least one additional scope (e.g., labelled as X, Y, and Z in the following). This second header portion may comprise, for example, a 3GPP-Sbi-Additional-Access-Scopes portion.

During 9003, the SCP 902 signal the NRF 903. This signalling may comprise an NF discovery request for identifying at least one NF service producer that is able to provide the service requested in the service request of 9002.

During 9004, the NRF 903 signals the SCP 902. This signalling may comprise an NF discovery response. For example, the signalling may comprise at least a part of an NF profile for NFp that indicates allowed operations per NF type and/or per NF instance.

During 9005, the SCP 902 signals the NRF 903. This signalling may comprise an access token request. This signalling may comprise a request for an access token for scopes S, W, X, Y, and Z. This signalling may comprise at least one indication that indicates which of these scopes are for the actual service being requested (e.g., S and W), and which of these scopes are not for the actual service being requested (e.g., X, Y, and Z).

As previously discussed, throughout the examples provided herein, the SCP may determine a set of scopes for authorizing the incoming service request as being: the scopes received in the 3gpp-Sbi-Access-Scope header in the service request received from the NFc; or the intersection of the scopes received in the 3gpp-Sbi-Access-Scope header in the service request received from the NFc and the scopes allowed to the NFc by the NFp as registered in the NFp profile discovered by the SCP from the NRF.

Further, the SCP may determine the additional scopes not used for authorizing the incoming service request as being: the scopes received in a new 3gpp-Sbi-Additional-Access-Scopes header in the service request received from the NFc; or the scopes allowed to the NFc by the NFp as registered in the NFp profile discovered by the SCP from the NRF, other than those listed in the 3gpp-Sbi-Access-Scope header; or any intersection of the above lists.

During 9006, the NRF 903 signals the SCP 902. This signalling may comprise an access token response. This signalling may comprise an access token. This access token may comprise a token for scopes S, X, and Y (e.g., the scopes that NFp 904 is registered as being able to provide to an NF service consumer in NFp's profile at the NRF that overlap with the requested scope(s) of 9005). Therefore, this access token cannot be used for accessing services utilising the scope W. This signalling may comprise an explicit indication of which scope(s) are available via this access token.

During 9007, the SCP 902 signals the NFc 901. This signalling may comprise an indication that the service request has been unsuccessful. This signalling may comprise the access token of 9006. This signalling may comprise an indication of which scope(s) are available via this access token. For example, this signalling may comprise a 3gpp-Sbi-Access-Token, and indicate that this access token is valid for scopes S, X, and Y. The NFc 901 may cache this access token. The NFc 901 may not receive the service with scopes S and W from the NFp 904 subsequent to this successful establishment. This signalling may be performed without the SCP 902 signalling the access token the NFp 904.

During 9008, the NFc 901 determines to request a new service that utilises a resource and/or operation defined with additional scope Y.

During 9009, the NFc 901 signals the SCP 902. This signalling may comprise a service request. This service request may comprise a service request in respect of scope Y. For example, this signalling may comprise a service request for service-level scope S with resource and/or operation scope Y. This signalling may comprise a 3gpp-Sbi-Access-Scope. This signalling may comprise an explicit indication of scope S and scope Y.

During 9010, the SCP 902 determines that the SCP 902 does not need to signal discovery and/or access token requests as the access token received during 9006 is able to be used for service being requested during 9009. The SCP 902 may make this determination based on a previous caching of the access token received during 9006 at the SCP 902. The SCP 902 may make this determination based on receipt of the access token in the service request of 9009.

Subsequent to this determination, during 9011, the SCP 902 signals a service request for scopes S and Y to the NFp 904.

During 9012, the NFp 904 signals the SCP 902. This signalling may indicate that the service request of 9011 was successful. This indication that the service request was successful may be forwarded (not shown) to the NFc 901. The NFc 901 may receive the service with scopes S and Y from the NFp 904 subsequent to this successful establishment.

This example of Figure 9 relates to scenarios in which an SCP requests an access token using a list of scopes indicated to the SCP in a 3gpp-Sbi-Access-Scope header portion and in a 3gpp-Sbi-Additional-Access-Scopes header portion received from the NFc in a service request, and the NRF provides an access token for a list of scopes that does not include at least one of the scopes of the 3gpp-Sbi-Access-Scope. The NRF may comprise the access token obtained in the service rejection response to the NFc. This allows the NFc to reuse the access token that may have been granted for a later service request (e.g. for a new service request that includes at least one of the scopes that were indicated in the 3gpp-Sbi-Additional-Access-Scopes).

As a variation to the above examples of Figures 6 to 9, the NFc may encode a wildcard scope in the 3gpp-Sbi-Additional-Access-Scopes header. This wildcard scope may indicate that the NFc prefers the access token to be valid for any scope defined in the 5GC API (of the service request), if possible.

As an example, consider when the NFc is an AMF and the NFp is an SDM. The AMF that wants to access a specific resource and/or operation of the SDM API can indicate a preference to get an access token valid for any resource and/or operation of the SDM API that the AMF may need to access later on. So as an example, when sending a service request to "read Access and Mobility Subscription Data", the enhancements specified herein may allow the SCP and AMF to obtain an access token that authorizes all the following service operations/access to any of the following UDM SDM resources listed in Table 3.

*Table 3 Access requested and potential labels*

| Label | Access Requested |
|---|---|
| "nudm-sdm :multi-data-sets: read" | Access to read multiple data sets |

(continued)

| Label | Access Requested |
|-------|------------------|
| "nudm-sdm:nssai:read" | Access to read NSSAI |
| "nudm-sdm: ue-context-in-amf-data:read" | Access to read UE context in AMF data |
| "nudm-sdm:am-data:read" | Access to read Access And Mobility Subscription data |
| "nudm-sdm:ecr-data:read" | Access to read Enhanced Coverage Restriction (ECR) data |
| "nudm-sdm:smf-select-data: read" | Access to read SMF Selection data |
| "nudm-sdm:ue-context-in-smsf-data:read" | Access to read UE context in Short Message Service Function (SMSF) data |
| "nudm-sdm:trace-data:read" | Access to read Trace data |
| "nudm-sdm:lcs-privacy-data: read" | Access to read location services (LCS) privacy data |
| "nudm-sdm:lcs-mo-data:read" | Access to read LCS Mobile Originated (MO) data |
| "nudm-sdm:lcs-bca-data:read" | Access to read LCS Broadcast Assistance (BCA) data |
| "nudm-sdm :v2x-data: read" | Access to read Vehicle to anything (V2X) data |
| "nudm-sdm: prose-data:read" | Access to read Prose data |
| "nudm-sdm:5mbs-data:read" | Access to read 5G Multicast Broadcast Services (5MBS) data |
| "nudm-sdm:id-translation-result:read" | Access to read identifier Translation Results |
| "nudm-sdm:sor-ack:write" | Access to write Steering of Roaming (SOR) acknowledgements |
| "nudm-sdm:upu-ack:write" | Access to write UE parameters update (UPU) acknowledgements |
| "nudm-sdm:subscribed-nssais-ack:write" | Access to write Subscribed NSSAIs acknowledgements |
| "nudm-sdm:cag-ack:write" | Access to write Closed Access Group (CAG) acknowledgements |
| "nudm-sdm:update-sor:invoke" | Access to invoke SOR info update |
| "nudm-sdm:shared-data:read" | Access to read shared data |
| "nudm-sdm:group-identifiers: read" | Access to read Group Identifiers |
| "nudm-sdm:multiple-identifiers: read" | Access to read multiple Identifiers (e.g., UE identifiers, such as Subscription Permanent Identifiers belonging to generic public subscription identifiers, or some other globally unique identifier of the UE) |

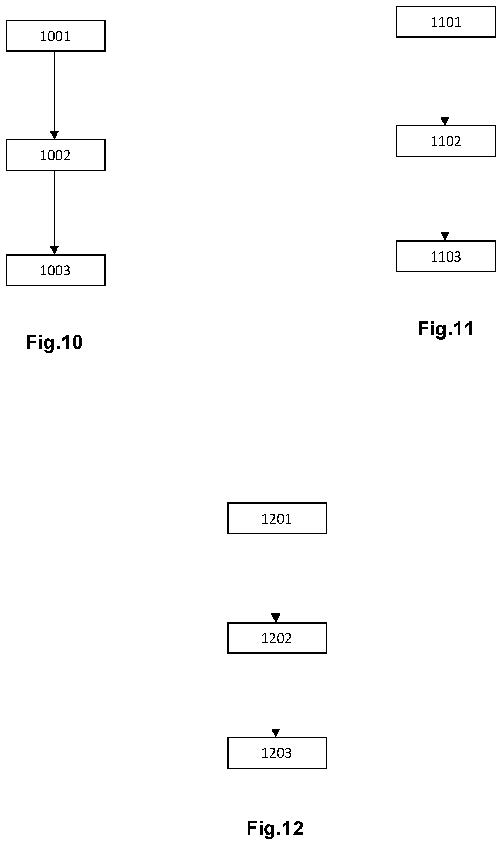

Figures 10 to 12 illustrate operations that may be performed by apparatus described herein. These Figures illustrate features of the above-mentioned examples, and so correspondence may be found between these features and elements of the following operations.

Figure 10 illustrates operations that may be performed by a first network apparatus. The first network apparatus may comprise a proxy function. For example, the first network apparatus may comprise an SCP.

During 1001, the first network apparatus signals, to a second network apparatus, a request for an access token for a network function consumer for authorizing the network function service consumer to access a first service from a network function service producer.

The second network apparatus may comprise an apparatus the retains information on network function service producers. For example, the second network apparatus may comprise an apparatus that can cause an access token to be provided to a network function service consumer for accessing a service from a network function service producer. The second network function may comprise a network repository function.

During 1002, the first network apparatus receives an access token from the second network apparatus, wherein the access token comprises an indication of at least one second access right unassociated with accessing the first service. The access token of 1002 is labelled herein as a received access token. The access token of 1002 may correspond to the access token requested in 1001, or may not correspond to the access token requested in 1001 (e.g., when the requested access rights/scopes of the generated access token differ from the access rights/scopes of the requested access token).

During 1003, the first network apparatus may cause the received access token to be provided to the network function service producer when the network function service producer is signalled a request to provide a service to the network function service consumer.

The request to provide a service to the network function service consumer may comprise a request to provide the first service when the received access token comprises an indication of all of the access rights (e.g., scopes) associated with providing the first service.

Stated differently, the first network apparatus may: determine, that the first service is associated with a predetermined set of access rights; determine that the received access token comprises all access rights of the predetermined set of access rights; and provide the received access token to the network function service producer to request the first service.

The request to provide a service to the network function service consumer may not comprise a request to provide the first service when the received access token omits an indication of at least one of the access rights (e.g., scopes) associated with providing the first service. Regardless, the first network apparatus may retain the received access token and/or provide the received access token to the network function service consumer for use in requesting a second (different service).

Stated differently, the first network apparatus may: determine, that the first service is associated with a predetermined set of access rights; determine that the received access token granted by the second network apparatus omits at least one access right of the predetermined set of access rights; and retain the received access token and/or providing the received access token to the network function service consumer without requesting the network function service producer to provide the network function service consumer with the first service.

The request to provide a service to the network function service consumer may comprise a request to provide a second service when the received access token comprises an indication of all of the access rights associated with providing the second service, where at least one of the access rights associated with providing the second service is at least one of the second access rights.

For example, the first network apparatus may cause the received access token to be provided to the network function service producer when the network function service producer is signalled a request to provide a second service to the network function service consumer, wherein the second service is associated with at least one of the at least one second access right.

The causing the received access token to be provided to the network function service producer when the network function service producer is signalled a request to provide the second service to the network function service consumer may comprise signalling the received access token to the network function service producer with a request to provide the network function service consumer with the second service.

The first network apparatus may receive, from the network function service consumer, a request for the second service that comprises the received access token.

The first network apparatus may determine not to request a new access token in dependence on determining that the received access token authorizes access to the at least one second access right.

The first network apparatus may receive, from the network function service consumer, a service request for the first service prior to said signalling the request for an access token.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The first network apparatus may signal, to the second network apparatus, a discovery request for discovering the network function service producer, and receive an indication of the network function service producer prior to said signalling the request for an access token.

The signalling the request for an access token may comprise signalling a request for at least one of: an indication that at least one first access right associated with accessing the first service is being requested, an indication that the at least one second access right unassociated with accessing the first service is being requested, or an indication that all access rights provided by the network function service producer are being requested.

The first network apparatus may provide the network function service consumer with the received access token that comprises the indication of at least one second access right unassociated with accessing the first service.

The causing the received access token to be provided to the network function service producer when the network function service producer is signalled a request to provide the service to the network function service consumer may comprise signalling the received access token to the network function service producer with a request to provide the network function service consumer with the first service.

Figure 11 illustrates operations that may be performed by a second network apparatus. The second network apparatus may be as described above in relation to Figure 10.

For example, the second network apparatus may comprise an apparatus the retains information on network function service producers. For example, the second network apparatus may comprise an apparatus that can cause an access token to be provided to a network function service consumer for accessing a service from a network function service producer. The second network function may comprise a network repository function.

The first network apparatus mentioned herein may correspond to the first network apparatus of Figure 10. For example, the first network apparatus may comprise an SCP.

During 1101, the second network apparatus may receive, from a first network apparatus, a request for an access token for a network function consumer for authorizing the network function service consumer to access a first service from a network function service producer.

During 1102, the second network apparatus may generate an access token, wherein the access token comprises an indication of at least one second access right unassociated with accessing the first service. The access token of 1102 is labelled herein as a generated access token. The access token of 1102 may correspond to the access token requested in 1101, or may not correspond to the access token requested in 1101 (e.g., when the requested access rights/scopes of the generated access token differ from the access rights/scopes of the requested access token).

During 1103, the second network apparatus may signal, to the first network apparatus, the generated access token.

The second network apparatus may: receive, from the network function service producer, an indication of at least one of: at least one first access right associated with accessing the first service, or the at least one second access right, and store the at least one first access right and/or the at least one second access right in a network profile for the network function service producer.

Said generating may comprise retrieving the indication of the at least one first access right and/or the at least one second access right in a network profile for the network function service producer from the network profile.

The request may comprise at least one of: an indication that at least one first access right associated with accessing the first service is being requested, an indication of at least one second access right unassociated with accessing the first service is being requested, or an indication that all access rights provided by the network function service producer are being requested.

The second network apparatus may: determine, that the first service is associated with a predetermined set of access rights; determine that the generated access token omits at least one access right of the predetermined set of access rights; and provide the generated access token to the first network apparatus.

The second network apparatus may: determine, that the first service is associated with a predetermined set of access rights; determine that the generated access token comprises all access right of the predetermined set of access rights; and provide the generated access token to the first network apparatus.

Figure 12 illustrates operations that may be performed by an apparatus for a network function service consumer. The network function service consumer may comprise the network function service consumer of Figure 10 and/or of Figure 11.

During 1201, the network function service consumer signals, to a first network apparatus, a service request for accessing a first service from a network function service producer. The first network apparatus may comprise the first network apparatus of Figure 10 and/or Figure 11.

During 1202, the network function service consumer receives an access token from the first network apparatus, wherein the access token comprises an indication of at least one second access right unassociated with accessing the first service.

During 1203, the network function service consumer causes the access token to be provided to the network function service producer when the network function service producer is signalled a request to provide a service to the network function service consumer.

The service request may comprise at least one of: an indication that at least one first access right associated with accessing the first service is being requested, an indication that the at least one second access right unassociated with accessing the first service is being requested, or an indication that all access rights provided by the network function service producer are being requested.

The apparatus may cause the access token to be provided to the network function service producer when the network function service producer is signalled a request to provide a second service to the network function service consumer, wherein the second service is associated with at least one of the at least one second access right. In such a case, the causing the access token to be provided to the network function service producer when the network function service producer is signalled a request to provide the second service to the network function service consumer may comprise signalling the access token to the network function service producer (e.g., via the first network apparatus/SCP) with a request to provide the network function service consumer with the second service.

The apparatus may signal, to the first network apparatus, a request for the second service that comprises the access token.

The apparatus may determine that the second service is associated with a second predetermined set of access rights, determine that the access token comprises all of the access rights of the predetermined set of access rights, and provide the access token to the first network apparatus when signalling a request to access the second service.

The apparatus may determine that the first service is associated with a first predetermined set of access rights, determine that the access token omits at least one access right of the first predetermined set of access rights, and retain the access token. This may be useful in the event that a later requested service (e.g., the second service) has access rights (e.g., scopes) that are wholly covered by the that access token.

In all of the above examples, the access right to access a service may correspond to a scope of an authorization access token.

Further, in all of the above examples, an access right may be said to be "associated" with a service when that access right is to be used for (e.g., required for) accessing that service. Stated differently, an access right may be said to be "unassociated" with a service when that access right is not to be used for (e.g., not required for) accessing that service.

The presently described examples may drastically reduce the number of access token requests that need to be requested by the SCP to NRF compared to current schemes as a result of a much wider reuse of the access tokens for different service operations of a same API.

The foregoing description has provided by way of non-limiting examples a full and informative description of some examples. However, various modifications and adaptations may become apparent to those skilled in the relevant arts in view of the foregoing description, when read in conjunction with the accompanying drawings and the claims. However, all such and similar modifications of the teachings will still fall within the scope of the claims.

In the above, different examples are described using, as an example of an access architecture to which the described techniques may be applied, a radio access architecture based on long term evolution advanced (LTE Advanced, LTE-A) or new radio (NR, 5G), without restricting the examples to such an architecture, however. The examples may also be applied to other kinds of communications networks having suitable means by adjusting parameters and procedures appropriately. Some examples of other options for suitable systems are the universal mobile telecommunications system (UMTS) radio access network (UTRAN), wireless local area network (WLAN or Wi-Fi), worldwide interoperability for microwave access (WiMAX), Bluetooth®, personal communications services (PCS), ZigBee®, wideband code division multiple access (WCDMA), systems using ultra-wideband (UWB) technology, sensor networks, mobile ad-hoc networks (MANETs) and Internet Protocol multimedia subsystems (IMS) or any combination thereof.

As provided herein, various aspects are described in the detailed description of examples and in the claims. In general, some examples may be implemented in hardware or special purpose circuits, software code, logic or any combination thereof. For example, some aspects may be implemented in hardware, while other aspects may be implemented in firmware or software code which may be executed by a controller, microprocessor or other computing device, although examples are not limited thereto. While various examples may be illustrated and described as block diagrams, flow charts, or using some other pictorial representation, it is well understood that these blocks, apparatus, systems, techniques or methods described herein may be implemented in, as non-limiting examples, hardware, software code, firmware code, special purpose circuits or logic, general purpose hardware or controller or other computing devices, or some combination thereof.

The examples may be implemented by computer software code stored in a memory and executable by at least one data processor of the involved entities or by hardware, or by a combination of software code and hardware.

The memory referred to herein may be of any type suitable to the local technical environment and may be implemented using any suitable data storage technology, such as semiconductor based memory devices, magnetic memory devices and systems, optical memory devices and systems, fixed memory and removable memory.

The (data) processors referred to herein may be of any type suitable to the local technical environment, and may comprise one or more of general purpose computers, special purpose computers, microprocessors, digital signal processors (DSPs), application specific integrated circuits (ASIC), FPGA, gate level circuits and processors based on multi core processor architecture, as non-limiting examples.

Further in this regard it should be noted that any procedures, e.g., as in Figure 10, and/or Figure 11 and/or Figure 12, and/or otherwise described previously, may represent operations of a computer program being deployed by at least one processor comprised in an apparatus (where a computer program comprises instructions for causing an apparatus to perform at least one action, the instructions being represented as software code stored on at least one memory), or interconnected logic circuits, blocks and functions, or a combination of operations of a computer program being deployed by at least one processor comprised in an apparatus and logic circuits, blocks and functions. The software code may be stored on memory, such as physical media as memory chips, or memory blocks implemented within the processor, magnetic media (such as hard disk or floppy disks), and optical media (such as for example DVD and the data variants thereof, CD, and so forth).

The memory may be of any type suitable to the local technical environment and may be implemented using any suitable data storage technology, such as semiconductor-based memory devices, magnetic memory devices and systems, optical memory devices and systems, fixed memory and removable memory. The data processors may be of any type suitable to the local technical environment, and may include one or more of general purpose computers, special purpose computers, microprocessors, digital signal processors (DSPs), application specific integrated circuits (ASIC), gate level circuits and processors based on multicore processor architecture, as nonlimiting examples.

Additionally or alternatively, some examples may be implemented using circuitry. The circuitry may be configured to perform one or more of the functions and/or method steps previously described. That circuitry may be provided in the base station and/or in the communications device and/or in a core network entity.

As used in this application, the term "circuitry" or "means" may refer to one or more or all of the following:

(a) hardware-only circuit implementations (such as implementations in only analogue and/or digital circuitry);
(b) combinations of hardware circuits and software cade, such as:

(i) a combination of analogue and/or digital hardware circuit(s) with software/firmware code and
(ii) any portions of hardware processor(s) with software code (including digital signal processor(s)), software code, and memory(ies) that work together to cause an apparatus, such as the communications device or base station to perform the various functions previously described; and

(c) hardware circuit(s) and or processor(s), such as a microprocessor(s) or a portion of a microprocessor(s), that requires software code (e.g., firmware) for operation, but the software code may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware code. The term circuitry also covers, for example integrated device.

Implementations of the disclosure may be practiced in various components such as integrated circuit modules. The design of integrated circuits is by and large a highly automated process. Complex and powerful software tools are available for converting a logic level design into a semiconductor circuit design ready to be etched and formed on a semiconductor substrate.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The term "non-transitory," as used herein, is a limitation of the medium itself (i.e., tangible, not a signal) as opposed to a limitation on data storage persistency (e.g., RAM vs. ROM).

The scope of protection sought for various examples of the disclosure is set out by the independent claims. The examples and features, if any, described in this specification that do not fall under the scope of the independent claims are to be interpreted as examples useful for understanding the disclosure.

The foregoing description has provided by way of non-limiting examples a full and informative description of example implementations of this disclosure. However, various modifications and adaptations may become apparent to those skilled in the relevant arts in view of the foregoing description, when read in conjunction with the accompanying drawings and the appended claims. However, all such and similar modifications of the teachings of this disclosure will still fall within the scope of this invention as defined in the appended claims. Indeed, there is a further implementation comprising a combination of one or more implementations with any of the other implementations previously discussed.

**Claims**

1. A first network apparatus comprising:

at least one processor; and
at least one memory comprising software code that, when executed by the at least one processor, causes the first network apparatus to perform:

receiving, from a network function service consumer, a service request for accessing a service, the service request for accessing the service comprising at least one first scope associated with accessing the service and at least one second scope unassociated with accessing the service;

signalling, to a second network apparatus, a request for an access token for the network function service consumer for authorizing the network function service consumer to access the service from a network function service producer, the request for the access token comprising the at least first scope associated with accessing the service and the at least one second scope unassociated with accessing the service;

receiving the access token from the second network apparatus, wherein the access token that is received is associated with the at least one first scope associated with accessing the service and with the at least one second scope unassociated with accessing the service; and

signalling, to the network function service producer, a service request to provide the service to the network function service consumer, the service request to provide the service comprising the access token that is received.

2. A first network apparatus of claim 1, wherein the software code, when executed by the at least one processor, further causes the first network apparatus to perform:

signalling, to the second network apparatus, a discovery request for discovering the network function service producer; and

receiving an indication of the network function service producer prior to said signalling the request for the access token.

3. A first network apparatus as claimed in any preceding claim, wherein the software code, when executed by the at least one processor, further causes the first network apparatus to perform:
providing the network function service consumer with the access token that is received.

4. A first network apparatus as claimed in any preceding claim, wherein the software code, when executed by the at least one processor, further causes the first network apparatus to perform:
signalling, to the network function service producer, a service request to provide a further service to the network function service consumer, the service request to provide the further service comprising the access token that is received, wherein the further service is associated with at least one of the at least one second scopes.

5. A first network apparatus as claimed in any preceding claim, wherein the signalling, to the network function service producer, the service request to provide the service to the network function service consumer comprises:

determining, that the service is associated with a predetermined set of scopes;
determining that the access token that is received is associated with all scopes of the predetermined set of scopes.

6. A second network apparatus comprising:

at least one processor; and
at least one memory comprising software code that, when executed by the at least one processor, causes the second network apparatus to perform:

receiving, from a first network apparatus, a request for an access token for a network function service consumer for authorizing the network function service consumer to access a service from a network function service producer, the request for the access token comprising at least one first scope associated with accessing the service and at least one second scope unassociated with accessing the service;

generating the access token, wherein the access token is associated with the at least one first scope associated with accessing the service and with the at least one second scope unassociated with accessing the service; and

signalling, to the first network apparatus, the access token that is generated.

7. A second network apparatus of claim 6, wherein the software code, when executed by the at least one processor, further causes the second network apparatus to perform:

receiving, from the network function service producer, at least one of the at least one first scope associated with accessing the service, or the at least one second scope unassociated with accessing the service; and
storing the at least one of the at least one first scope or the at least one second scope in a network profile for the network function service producer.

8. A second network apparatus of claim 7, wherein the generating comprises retrieving the at least one of the at least one first scope or the at least one second scope from the network profile for the network function service producer.

9. An apparatus for a network function service consumer, the apparatus comprising:

   at least one processor; and
   at least one memory comprising software code that, when executed by the at least one processor, causes the second network apparatus to perform:
   signalling, to a first network apparatus, a service request for accessing a service, the service request comprising an indication of at least one first scope associated with accessing the service and at least one second scope unassociated with accessing the service.

10. An apparatus as claimed in any of claims 1 to 9, wherein the access token corresponds to an authorization access token, and the at least one first scope and the at least one second scope correspond to respective scopes of the authorization access token.

11. A method comprising:

   receiving, from a network function service consumer, a service request for accessing a service, the service request for accessing the service comprising at least one first scope associated with accessing the service and at least one second scope unassociated with accessing the service;
   signalling, to a second network apparatus, a request for an access token for the network function service consumer for authorizing the network function service consumer to access the service from a network function service producer, the request for the access token comprising the at least first scope associated with accessing the service and the at least one second scope unassociated with accessing the service;
   receiving the access token from the second network apparatus, wherein the access token that is received is associated with the at least one first scope associated with accessing the service and with the at least one second scope unassociated with accessing the service; and
   signalling, to the network function service producer, a service request to provide the service to the network function service consumer, the service request to provide the service comprising the access token that is received.

12. The method claim 11, further comprising:

   signalling, to the second network apparatus, a discovery request for discovering the network function service producer; and
   receiving an indication of the network function service producer prior to said signalling the request for the access token.

13. The method of claim 11 or 12, further comprising:
   providing the network function service consumer with the access token that is received.

14. The method of any of claims 11 to 13, further comprising:
   signalling, to the network function service producer, a service request to provide a further service to the network function service consumer, the service request to provide the further service comprising the access token that is received, wherein the further service is associated with at least one of the at least one second scopes.

15. The method of any of claims 11 to 14, wherein the signalling, to the network function service producer, the service request to provide the service to the network function service consumer comprises:

   determining, that the service is associated with a predetermined set of scopes;
   determining that the access token that is received is associated with all scopes of the predetermined set of scopes.

Fig. 1A

Fig. 1B

100

| | | | | | |
|---|---|---|---|---|---|
| 122' | 124' | 126' | 108' | 130' | 132' |

Nudm    Nnef    Nnwdaf    Naf    Npcf    Nchf

Nnrf    Namf    Nsmf    Nnf

| | | | |
|---|---|---|---|
| 133' | 112' | 114' | 134' |

N4

| |
|---|
| 120' |

**Fig. 2**

**Fig.3**

401'    402'

4001'

4002'

4003'

**Fig.4a**

401''    402''

4001''

4002''

4003''

**Fig.4b**

**Fig.5**

EP 4 462 839 A1

Fig.6

**Fig.7**

**Fig.8**

EP 4 462 839 A1

Fig.9

```
┌──────────┐
│   1001   │
└──────────┘
     │
     ▼
┌──────────┐
│   1002   │
└──────────┘
     │
     ▼
┌──────────┐
│   1003   │
└──────────┘
```

**Fig.10**

```
┌──────────┐
│   1101   │
└──────────┘
     │
     ▼
┌──────────┐
│   1102   │
└──────────┘
     │
     ▼
┌──────────┐
│   1103   │
└──────────┘
```

**Fig.11**

```
┌──────────┐
│   1201   │
└──────────┘
     │
     ▼
┌──────────┐
│   1202   │
└──────────┘
     │
     ▼
┌──────────┐
│   1203   │
└──────────┘
```

**Fig.12**

Europäisches
Patentamt

European
Patent Office

Office européen
des brevets

**EUROPEAN SEARCH REPORT**

Application Number

EP 24 17 3048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | "3rd Generation Partnership Project; Technical Specification Group Core Network and Terminals; 5G System; Technical Realization of Service Based Architecture; Stage 3 (Release 17)", 3GPP STANDARD; TECHNICAL SPECIFICATION; 3GPP TS 29.500, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. CT WG4, no. V17.6.0 18 March 2022 (2022-03-18), pages 1-126, XP052144587, Retrieved from the Internet: URL:https://ftp.3gpp.org/Specs/archive/29_ series/29.500/29500-h60.zip 29500-h60.docx [retrieved on 2022-03-18] * 6.4, 6.10 * | 1-15 | INV. H04W12/084 |
| X,P | Nokia: "C4-233514 Access token with additional scopes for indirect.com with delegated discovery", , 9 August 2023 (2023-08-09), XP093206315, Retrieved from the Internet: URL:https://portal.3gpp.org/ngppapp/Downlo adTDoc.aspx?contributionUid=C4-233514 [retrieved on 2024-09-18] * the whole document * | 1-15 | **TECHNICAL FIELDS SEARCHED (IPC)** H04W |

-/--

The present search report has been drawn up for all claims

| Place of search | Date of completion of the search | Examiner |
|---|---|---|
| Munich | 18 September 2024 | Kufer, Léna |

page 1 of 2

Europäisches
Patentamt

European
Patent Office

Office européen
des brevets

**EUROPEAN SEARCH REPORT**

Application Number

EP 24 17 3048

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | NOKIA ET AL: "Re-using of access token in indirect communication with delegated discovery", 3GPP DRAFT; S3-202883, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. SA WG3, no. Online; 20201109 - 20201120 30 October 2020 (2020-10-30), XP051949460, Retrieved from the Internet: URL:https://ftp.3gpp.org/tsg_sa/WG3_Securi ty/TSGS3_101e/Docs/S3-202883.zip S3-202883 Re-using of access token in indirect communication with delegated discovery.docx [retrieved on 2020-10-30] * the whole document * | 1-15 | |

- - - - -

TECHNICAL FIELDS
SEARCHED (IPC)

The present search report has been drawn up for all claims

| Place of search | Date of completion of the search | Examiner |
|---|---|---|
| Munich | 18 September 2024 | Kufer, Léna |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)